(19) Europäisches Patentamt
European Patent Office
Office européen des brevets

(11) **EP 4 738 687 A1**

(12) **EUROPEAN PATENT APPLICATION**
published in accordance with Art. 153(4) EPC

(43) Date of publication:
06.05.2026 Bulletin 2026/19

(21) Application number: 24830194.7

(22) Date of filing: 11.05.2024

(51) International Patent Classification (IPC):
*H02P 6/08* (2016.01)

(86) International application number:
PCT/CN2024/092619

(87) International publication number:
WO 2025/001546 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 CN 202310779758

(71) Applicant: Xuxin Technology (Shenzhen) Group
Co., Ltd
Shenzhen, Guangdong 518042 (CN)

(72) Inventors:
• ZHANG, Ping
Shenzhen, Guangdong 518042 (CN)
• WU, Sin Hin
Shenzhen, Guangdong 518042 (CN)
• SUN, Xinglin
Shenzhen, Guangdong 518042 (CN)
• ZHOU, Huizhu
Shenzhen, Guangdong 518042 (CN)
• SUN, Yelin
Shenzhen, Guangdong 518042 (CN)
• LUO, Lanying
Shenzhen, Guangdong 518042 (CN)

(74) Representative: Bratovic, Nino Maria
Bratovic IP
Lissi-Kaeser-Straße 20
80797 München (DE)

(54) **DRIVING METHOD AND APPARATUS FOR BRUSHLESS ELECTRIC MOTOR, AND DEVICE**

(57)　The present disclosure relates to the technical field of driving of electric motors. Provided are a driving method and apparatus for a brushless electric motor, and a device. The brushless electric motor comprises: a stator core, which comprises Z tooth groups spaced apart from each other in a first circumferential direction; a rotor, which comprises a magnetic ring having P poles, P being an even number; and X phase conductors, which are wound on the tooth groups to form coils, where $X \geq 2$, and $Z = P \times X$, wherein in the same phase conductor, the coils on two adjacent tooth groups have opposite winding directions in a second circumferential direction of the tooth groups, and are spaced apart by X-1 tooth groups. The driving method comprises: by means of first ends and second ends, which are independent of each other, of N phase conductors, providing N periodically changing drive signals for the N phase conductors, wherein the waveform of each drive signal in one period comprises a first waveform, the intensity of which is greater than 0, and a second waveform, the intensity of which is less than 0, where $1 \leq N \leq X$. In this way, by means of a simple control mode, a brushless electric motor can be driven to provide a relatively large torque.

Drive signal of first phase wire
Drive signal of second phase wire

FIG. 4A

## Description

### TECHNICAL FIELD

The present disclosure relates to the technical field of motor driving, and in particular to a driving method, and apparatus for a brushless motor, and a device.

### BACKGROUND

Brushless direct current (DC) motors have the advantages of conventional DC motors while eliminating the carbon brush and slip ring structures, and can run at low speed and high power. Brushless DC motors have been widely used in the fields such as electrical servo drive, information processing, transportation, household appliances, consumer electronics, and national defense due to small size, light weight, good stability, and high efficiency.

A commonly used brushless DC motor is single-phase brushless DC motor, which has the characteristics of small size and simple control.

Another commonly used brushless DC motor is three-phase brushless DC motor, which has the characteristics of long service life, low noise, flexible driving modes, and mature industrial chain technology and can be applied to a wide range of scenarios including various civilian products and military products. In addition, due to wide speed regulation range, small size, high efficiency, and small steady-state speed error, three-phase brushless DC motors also have advantages in the field of speed regulation.

Three-phase brushless DC motors adopt a UVW three-phase winding and a corresponding magnetic ring layout design. There are two wiring modes for the three-phase winding: star configuration and delta configuration. Using an electric motor as an example, a driver program is used to sequentially energize the phases of a three-phase winding to produce a rotating magnetic field to drive a rotor provided with a magnetic ring to rotate.

However, single-phase brushless DC motors and three-phase brushless DC motors have their respective disadvantages.

Single-phase brushless DC motors produce a small torque and therefore can be applied to only a limited range of application scenarios such as low-power household appliances.

Three-phase brushless DC motors, although capable of providing greater torque, require six distinct methods to regularly switch and energize two phases among the "UVW" three-phase windings during the driving process. The drive signal for each phase is interrelated with those of the other phases, making control complex.

## SUMMARY

In view of the above, the present disclosure provides the following schemes for driving a brushless motor by simple control to provide a large torque.

In accordance with one aspect of the present disclosure, an embodiment provides a driving method for a brushless motor. The brushless motor includes: a stator core, including Z tooth groups spaced apart from each other in a first circumferential direction; a rotor, including a magnetic ring having a pole number P, P being an even number; and X phase wires, wound on the tooth groups to form coils, $X \geq 2$, and $Z = P \times X$, where in each of the phase wires, the coils on two neighboring tooth groups have opposite winding directions in a second circumferential direction of the tooth groups, and are spaced apart by X-1 tooth groups; the driving method includes: providing N periodically varying drive signals to N phase wires through first ends and second ends, which are independent of each other, of the N phase wires, where a waveform of each drive signal in one period includes a first waveform with an intensity greater than 0 and a second waveform with an intensity less than 0, $1 \leq N \leq X$.

In some embodiments, $2 \leq N \leq X$, and intensities of the N drive signals are always not 0 in a first time interval.

In some embodiments, a moment at which the first waveform and the second waveform overlap is a first moment, and an intensity of each drive signal is always not 0 in any time interval other than the first moment in one period.

In some embodiments, an intensity of each drive signal is always 0 in a second time interval in one period.

In some embodiments, the intensity of each drive signal is not 0 at any moment in one period except for the second time interval.

In some embodiments, the N drive signals have the same amplitude.

In some embodiments, the first waveform is centrosymmetric to the second waveform.

In some embodiments, waveforms of the N drive signals are square waves; or the first waveform and the second waveform conform to a sine function.

In some embodiments, the brushless motor includes one or more stator cores, and the X phase wires are wound on the tooth groups in the first circumferential direction in an order from a $1^{st}$ phase wire to an $X^{th}$ phase wire; the N phase wires include an $i^{th}$ phase wire and a $k^{th}$ phase wire, and a phase difference between a drive signal of the $i^{th}$ phase wire and a drive signal of the $k^{th}$

phase wire is $\theta_{ik} = \frac{P}{2} \sum_{i}^{k-1} \beta_{X}$, where $1 \leq i < k \leq X$; and in each of the one or more stator cores, a spacing exists between the tooth group of an $x^{th}$ phase wire and each of neighboring tooth groups on two sides of the tooth group of the $x^{th}$ phase wire, the spacing has a center position in the first circumferential direction, and among all the spacings formed between the Z tooth groups, a central angle corresponding to an arc between the center position of the $x^{th}$ phase wire and each of the center positions neighboring to the center position of the $x^{th}$ phase wire in the first circumferential direction is $\beta_X$, and a sector corresponding to the arc includes at least a part of the tooth group of the $x^{th}$ phase wire.

In some embodiments, the method further includes: determining the N phase wires and a first amplitude of each of the drive signals according to a target torque of the rotor; and determining a first frequency of each of the drive signals according to a target rotational speed of the rotor.

In some embodiments, when the target torque is higher than a first preset torque, N=X.

In some embodiments, when the target torque is higher than the first preset torque, the first amplitudes of the N drive signals are the same.

In some embodiments, when the target torque is lower than a second preset torque, N<X, and the first amplitudes of the N drive signals are the same; or N=X, and at least two of the N drive signals have different first amplitudes.

In some embodiments, the method further includes: calling a set of parameters required to achieve the target rotational speed and the target torque from a plurality of sets of parameters, where the set of parameters represents a second frequency and a second amplitude of each of the drive signals; and determining the first frequency and the first amplitude of each of the drive signals according to the set of parameters.

In accordance with another aspect of the present disclosure, an embodiment provides a driving apparatus for a brushless motor, where the brushless motor includes: a stator core, including Z tooth groups spaced apart from each other in a first circumferential direction; a rotor, including a magnetic ring having a pole number P, P being an even number; and X phase wires, wound on the tooth groups to form coils, X≥2, and Z=P×X, where in each of the phase wires, the coils on two neighboring tooth groups have opposite winding directions in a second circumferential direction of the tooth groups, and are spaced apart by X-1 tooth groups; the driving apparatus includes: a providing module configured for providing N periodically varying drive signals to N phase wires through first ends and second ends, which are independent of each other, of the N phase wires, where a waveform of each drive signal in one period includes a first waveform with an intensity greater than 0 and a second waveform with an intensity less than 0, and 1≤N≤X.

In accordance with still another aspect of the present disclosure, an embodiment provides a driving apparatus for a brushless motor, including: a memory; and a processor coupled to the memory and configured for running instructions stored in the memory to execute the driving method for a brushless motor according to any one of the above embodiments.

In accordance with a further aspect of the present disclosure, an embodiment provides a device, including: the driving apparatus for a brushless motor according to any one of the above embodiments; and a brushless motor.

In accordance with a still further aspect of the present disclosure, an embodiment provides a computer-readable storage medium, having computer program instructions stored therein, where the computer program instructions, when executed by a processor, cause the processor to implement the driving method for a brushless motor according to any one of the above embodiments.

In the driving method for a brushless motor according to some embodiments of the present disclosure, N drive signals are provided to N phase wires through first ends and second ends, which are independent of each other, of the N phase wires. As such, the torque provided by the brushless motor increases as N increases, and because the N drive signals are independent of each other, the control is still relatively simple. Thus, the brushless motor can be driven by simple control to provide a large torque.

The technical schemes of the present disclosure will be further described in detail below with reference to the accompanying drawings and embodiments.

## BRIEF DESCRIPTION OF DRAWINGS

To describe the technical schemes of the embodiments of the present disclosure or the related art more clearly, the following briefly introduces the accompanying drawings required for describing the embodiments or the related art. Apparently, the accompanying drawings in the following description show only some embodiments of the present disclosure, and a person of ordinary skill in the art may still derive other drawings from these accompanying drawings without creative efforts.

FIG. 1A is a schematic diagram illustrating fitting of a stator core and a magnetic ring in a brushless motor according to some embodiments of the present disclosure.
FIG. 1B is a schematic structural diagram of wires wound on a stator core in a brushless motor according to some embodiments of the present disclosure.
FIG. 2 is a schematic flowchart of a driving method for a brushless motor according to some embodiments of the present disclosure.
FIG. 3A, FIG. 3B, and FIG. 3C are schematic diagrams illustrating the working principle of a brushless motor according to some embodiments of the present disclosure.
FIG. 4A is a waveform diagram of drive signals in a cross energization driving mode according to some embodiments of the present disclosure.
FIG. 4B is a waveform diagram of drive signals in a cross energization driving mode according to some other embodiments of the present disclosure.

FIG. 5 is a waveform diagram of drive signals in a cross energization driving mode according to some other embodiments of the present disclosure.

FIG. 6A is a waveform diagram of drive signals in an alternate energization driving mode according to some embodiments of the present disclosure.

FIG. 6B is a waveform diagram of drive signals in an alternate energization driving mode according to some other embodiments of the present disclosure.

FIG. 6C and FIG. 6D are waveform diagrams of drive signals in an alternate energization driving mode according to some other embodiments of the present disclosure.

FIG. 6E is a schematic structural diagram of two stator cores stacked in an axial direction in a brushless motor according to some embodiments of the present disclosure.

FIG. 7 is a schematic flowchart of a driving method for a brushless motor according to some other embodiments of the present disclosure.

FIG. 8 is a schematic structural diagram of a driving apparatus for a brushless motor according to some embodiments of the present disclosure.

FIG. 9 is a schematic structural diagram of a driving apparatus for a brushless motor according to some other embodiments of the present disclosure.

FIG. 10A is a schematic structural diagram of a driving circuit for a brushless motor according to some embodiments of the present disclosure.

FIG. 10B is a schematic structural diagram of a driving circuit for a brushless motor according to some other embodiments of the present disclosure.

FIG. 11 is a schematic flowchart of a method for controlling a driving circuit for a brushless motor according to some embodiments of the present disclosure.

FIG. 12 is a schematic flowchart of a method for controlling a driving circuit for a brushless motor according to some other embodiments of the present disclosure.

FIG. 13 is a schematic structural diagram of an apparatus for controlling a driving circuit for a brushless motor according to some embodiments of the present disclosure.

FIG. 14 is a schematic structural diagram of an apparatus for controlling a driving circuit for a brushless motor according to some other embodiments of the present disclosure.

FIG. 15A is a schematic circuit diagram of a driving system for a brushless motor according to some embodiments of the present disclosure.

FIG. 15B is a schematic circuit diagram of a driving system for a brushless motor according to some other embodiments of the present disclosure.

FIG. 16 is a schematic structural diagram of a driving circuit for a brushless motor according to some other embodiments of the present disclosure.

DETAILED DESCRIPTION

The technical schemes in the embodiments of the present disclosure will be described clearly and completely below in conjunction with the accompanying drawings in the embodiments of the present disclosure. Obviously, the described embodiments are merely a part rather than all of the embodiments of the present disclosure. Based on the embodiments of the present disclosure, all other embodiments obtained by those having ordinary skills in the art without creative efforts shall fall within the protection scope of the present disclosure.

Unless otherwise specifically stated, the relative arrangements of components and steps, numerical expressions, and numerical values set forth in the embodiments do not limit the scope of the present disclosure.

Meanwhile, it should be understood that, for the convenience of description, the dimensions of the various parts shown in the drawings are not drawn to actual scale.

Known technologies, methods, and devices to those having ordinary skills in the relevant field may not be discussed in detail, but where appropriate, such technologies, methods, and devices shall be deemed part of the specification.

In all examples shown and discussed herein, any specific value shall be construed as merely illustrative rather than a limitation. Therefore, other examples of the exemplary embodiments may have different values.

It should be noted that similar reference numerals and letters denote similar items in the following drawings, and thus, once an item is defined in one drawing, no further discussion thereof is required in subsequent drawings.

An embodiment of the present disclosure provides a driving method for a brushless motor.

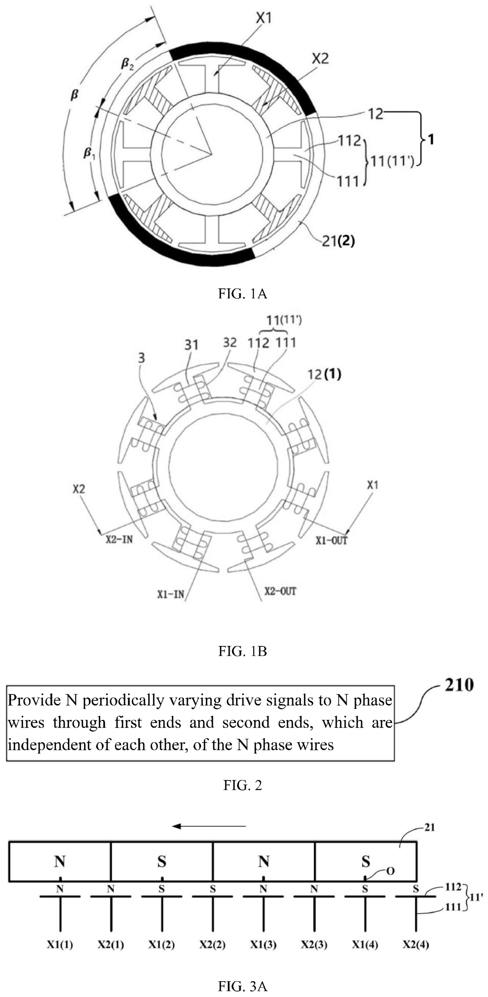

For ease of understanding, a brushless motor according to some embodiments of the present disclosure will first be described with reference to FIG. 1A and FIG. 1B. FIG. 1A is a schematic diagram illustrating fitting of a stator core and a magnetic ring in a brushless motor according to some embodiments of the present disclosure. FIG. 1B is a schematic structural diagram of wires wound on a stator core in a brushless motor according to some embodiments of the present disclosure.

As shown in FIG. 1A and FIG. 1B, the brushless motor includes a stator core 1, a rotor 2, and a plurality of phase wires 3.

The stator core 1 includes Z tooth groups 11 spaced apart from each other in a circumferential direction (hereinafter referred to as a first circumferential direction for distinguishing) of the stator core 1, Z being an integer. In some embodiments, referring to FIG. 1A and FIG. 1B, the stator core 1 further includes a yoke 12, and the tooth groups 11 are connected to the yoke 12.

There may be one or more stator core 1. It should be understood that in a case where the brushless motor includes a plurality of stator cores 1, the total number Z of the tooth groups 11 is the number of all the tooth groups 11 arranged on all the stator cores 1.

In some embodiments, the stator core 1 includes a plurality of stator cores stacked in an axial direction thereof. In this case, the tooth groups of different stator cores are staggered from each other.

Each tooth group 11 may include one tooth 11' or a plurality of teeth 11' neighboring in the first circumferential direction. FIG. 1B schematically shows a case where each tooth group 11 in the brushless motor includes one tooth 11'.

The rotor 2 includes a magnetic ring 21 having a pole number P, P being an even number greater than or equal to 2. For example, the rotor 2 may be arranged coaxially with the stator core 1 and rotatable relative to the stator core 1.

The magnetic ring 21 includes south poles (S) and north poles (N) alternately arranged in the first circumferential direction of the stator core 1. The number of south poles is the same as the number of north poles. In the brushless motor shown in FIG. 1A, the pole number P of the magnetic ring 21 is equal to 4, and in this case, magnetic poles arranged in the first circumferential direction of the stator core 1 are N-S-N-S in sequence.

The number of the plurality of phase wires 3 is denoted by X, i.e., X is an integer greater than or equal to 2. For example, X may be equal to 2, 3, or 5, etc. FIG. 1A and FIG. 1B schematically illustrate a case where X=2.

The X phase wires 3 are wound on the tooth groups 11 to form coils 31. In each of the phase wires 3, the coils 31 on two neighboring tooth groups 11 have opposite winding directions in a circumferential direction (hereinafter referred to as a second circumferential direction) of the tooth groups 11, and are spaced apart by X-1 tooth groups 11. Each phase wire 3 has two ends independent of each other, namely, a first end and a second end.

It can be understood that on the X-1 tooth groups 11 by which the coils 31 on two neighboring tooth groups 11 in any one of the phase wires 3 are spaced, the other X-1 phase wires 3 are respectively wound in one-to-one correspondence.

For example, the stator core 1 may include X stator cores stacked in the axial direction thereof, only one phase wire is wound on a tooth group of each stator core, and different phase wires are wound on tooth groups of different stator cores. In this case, the X-1 tooth groups 11 by which the coils 31 on two neighboring tooth groups 11 in one of the phase wires 3 are spaced may belong to the other X-1 stator cores than the stator core where the two tooth groups 11 are located.

Because the coils 31 on two neighboring tooth groups 11 in each phase wire 3 have opposite winding directions in the second circumferential direction of the tooth groups 11, magnetic fields generated at the two neighboring tooth groups 11 are in opposite directions. The coils 31 on two neighboring tooth groups 11 in each of the phase wires 3 may be connected by, for example, a connection segment 32.

It should be understood that the coils 31 on the same tooth group 11 have the same winding direction in the second circumferential direction. For example, each tooth group 11 may include a plurality of teeth 11', and the wire 3 may be wound on the plurality of teeth 11' to form a plurality of coils. In this case, the plurality of coils formed on the tooth group 11 have the same winding direction in the second circumferential direction.

In the brushless motor according to the embodiments of the present disclosure, the pole number P of the magnetic ring 21, the number X of the plurality of phase wires 3, and the number Z of the tooth groups 11 satisfy the following relationship: Z=P×X. In other words, each phase wire 3 is respectively wound on P tooth groups 11, and the magnetic poles correspond to X tooth groups 11 on which different phase wires 3 are wound.

In some implementations, each tooth group 11 includes a shank 111 and a shoe 112.

For example, referring to FIG. 1B, each tooth group 11 includes one tooth 11', and the tooth 11' includes a shank 111 and a shoe 112. For another example, each tooth group 11 includes a plurality of teeth 11', and each of the teeth 11' includes an independent shank 111 and an independent shoe 112. For another example, each tooth group 11 includes a plurality of teeth 11', each of the teeth 11' includes an independent shank 111, and the plurality of teeth 11' share one shoe 112.

In these implementations, the wire 3 is wound on the shank 111 of the tooth group 11, and when the wire 3 is energized (i.e., when the intensity of a drive signal provided to the wire 3 is not zero), a magnetic field is generated. Because the coils 31 on two neighboring tooth groups 11 in each of the phase wires 3 have opposite winding directions in the second circumferential direction of the tooth groups 11, when any one of the phase wires 3 is energized, magnetic fields generated at the two neighboring tooth groups 11 on which the phase wire 3 is wound are in opposite directions.

The brushless motor shown in FIG. 1A and FIG. 1B will be described below. The brushless motor shown in FIG. 1A and FIG. 1B includes two phase wires 3, namely, a first phase wire X1 and a second phase wire X2, and the pole number of the magnetic ring 21 is 4, i.e., X=2 and P=4. In this case, the number Z of the tooth groups 11 (i.e., the teeth 11') is 8.

The first phase wire X1 and the second phase wire X2 are each wound on four different teeth 11' to form four coils 31.

Among the four coils 31 formed by the first phase wire X1, the coils 31 on any two neighboring teeth 11' in the first circumferential direction of the stator core 1 are spaced by one tooth 11' on which the second phase wire X2 is wound, and the coils 31 on the two neighboring teeth 11' have opposite winding directions in the second circumferential direction of the teeth 11'.

Similarly, among the four coils 31 formed by the second phase wire X2, the coils 31 on any two neighboring teeth 11' in the first circumferential direction are spaced by one tooth 11' on which the first phase wire X1 is wound, and the coils 31 on the two neighboring teeth 11' also have opposite winding directions in the second circumferential direction.

It should be understood that FIG. 1A and FIG. 1B merely schematically illustrate that the brushless motor of the embodiments of the present disclosure may have an outer rotor structure (i.e., the magnetic ring 21 is arranged outside the stator core 1), but the present disclosure is not limited thereto.

For example, the brushless motor may have an inner rotor structure in which the magnetic ring 21 is arranged in the stator core 1.

For another example, the brushless motor may have a planar structure in which the magnetic ring 21 and the stator core 1 are stacked in the axial direction. In some implementations, the brushless motor may include one magnetic ring and one stator core stacked in the axial direction. In some other implementations, the brushless motor may include one magnetic ring and two stator cores stacked in the axial direction, the magnetic ring being located between the two stator cores. In still some other implementations, the brushless motor may include two magnetic rings and one stator core stacked in the axial direction, the stator core being located between the two magnetic rings.

The driving method for a brushless motor according to the present disclosure will be described below. FIG. 2 is a schematic flowchart of a driving method for a brushless motor according to some embodiments of the present disclosure.

As shown in FIG. 2, the driving method for a brushless motor includes the following step 210.

At 210, N periodically varying drive signals are provided to N phase wires 3 among X phase wires 3 through first ends and second ends, which are independent of each other, of the N phase wires 3. N is any integer greater than or equal to 1 and less than or equal to X.

For example, when X=2, N may be equal to 1 or 2. For another example, when X=3, N may be equal to 1, 2, or 3. For another example, when X=5, N may be equal to 1, 3, or 5.

A waveform of each of the N drive signals in one period includes a first waveform with an intensity greater than 0 and a second waveform with an intensity less than 0. In other words, the sign of the intensity of each drive signal changes in one period.

In some embodiments, the N drive signals have the same frequency.

In some embodiments, at least two of the N drive signals have different amplitudes. In some other embodiments, the N drive signals have the same amplitude.

In some embodiments, the first waveform and the second waveform of each drive signal are centrosymmetric. It can be understood that in one period of the drive signal, if one of the first waveform and the second waveform overlaps with the other of the first waveform and the second waveform after being flipped and translated along a horizontal axis, the first waveform is centrosymmetric to the second waveform.

In some embodiments, waveforms of the N drive signals are square waves. In some other embodiments, the first waveform and the second waveform of each of the N drive signals conform to a sine function. For example, the waveforms of the N drive signals are all sine waves. In some other embodiments, the waveforms of the N drive signals are not square waves, and the first waveform and the second waveform do not conform to a sine function. For example, the waveforms of the N drive signals are all bimodal waves or other waveforms.

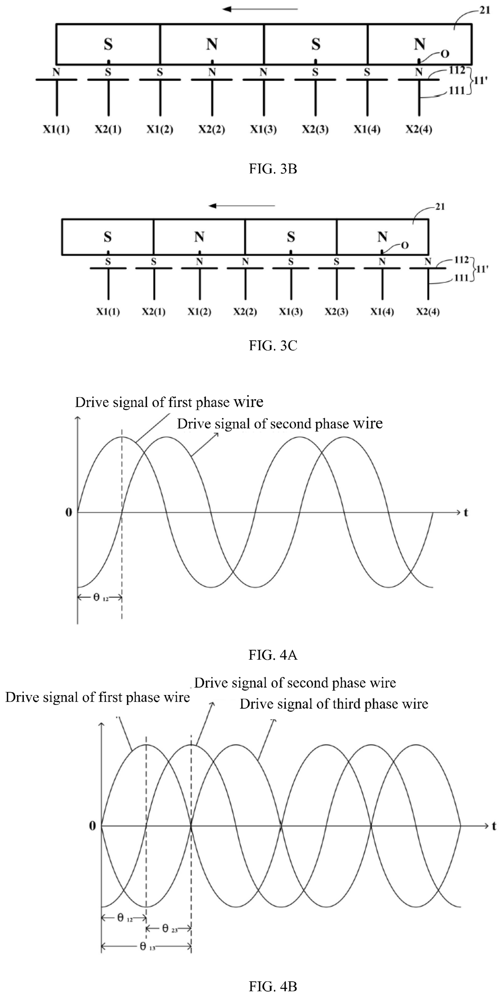

The working principle of the brushless motor provided by the present disclosure will be described below with reference to FIG. 3A, FIG. 3B, and FIG. 3C. FIG. 3A, FIG. 3B, and FIG. 3C are schematic diagrams illustrating the working principle of a brushless motor according to some embodiments of the present disclosure. For ease of understanding, in FIG. 3A, FIG. 3B, and FIG. 3C, the magnetic ring 21 and the teeth 11' in the brushless motor shown in FIG. 1A and FIG. 1B are schematically flattened into straight lines.

In FIG. 3A, FIG. 3B, and FIG. 3C, N=X=2. In other words, a drive signal is provided to the first phase wire X1 through a first end and a second end (X1-IN and X1-OUT) of the first phase wire X1, and at the same time, a drive signal is provided to the second phase wire X2 through a first end and a second end (X2-IN and X2-OUT) of the second phase wire X2.

For ease of distinguishing, in these figures, the teeth 11' on which the first phase wire X1 is wound are denoted by X1(1), X1(2), X1(3), and X1(4) in sequence from left to right, and the teeth 11' on which the second phase wire X2 is wound are denoted by X2(1), X2(2), X2(3), and X2(4) sequence from left to right.

As described above, because the coils 31 on two neighboring teeth 11' in each phase wire 3 have opposite winding directions in the circumferential direction of the teeth 11', when the intensity of the drive signal of the first phase wire X1 is not 0 (i.e., when the first phase wire X1 is energized), magnetic fields generated at any neighboring two of X1(1), X1(2), X1(3), and X1(4) are in opposite directions. Similarly, when the intensity of the drive signal of the second phase wire X2 is not 0 (i.e., when the second phase wire X2 is energized), magnetic fields generated at any neighboring two of X2(1), X2(2), X2(3), and X2(4) are also in opposite directions.

First, referring to FIG. 3A, critical points O of the four magnetic poles (i.e., midpoints of the magnetic poles in the circumferential direction of the stator core 1) are directly opposite to shoes 112 of X1(1), X1(2), X1(3), and X1(4) respectively. In this case, the intensity of the drive signal provided to the first phase wire X1 is positive or negative (assumed to be positive), and magnetic fields of N-S-N-S are sequentially generated at X1(1), X1(2), X1(3), and X1(4). The intensity of the drive signal provided to the second phase wire X2 is positive or negative (also assumed to be positive), and magnetic fields of N-S-N-S are sequentially generated at X2(1), X2(2), X2(3), and X2(4). The magnetic ring 21 rotates in a direction denoted by the arrow shown in FIG. 3A under the magnetic force.

After the magnetic ring 21 rotates by an angle (e.g., 90°), the relative positional relationship between the magnetic ring 21 and the teeth 11' is as shown in FIG. 3B, where the critical points O of the four magnetic poles are directly opposite to shoes 112 of X2(1), X2(2), X2(3), and X2(4) respectively. In this case, the intensity of the drive signal provided to the first phase wire X1 remains positive, and magnetic fields of N-S-N-S are still sequentially generated at X1(1), X1(2), X1(3), and X1(4). However, the intensity of the drive signal provided to the second phase wire X2 changes from positive to negative, and magnetic fields sequentially generated at X2(1), X2(2), X2(3), and X2(4) change from N-S-N-S to S-N-S-N. The magnetic ring 21 continues to rotate in the direction denoted by the arrow under the magnetic force.

After the magnetic ring 21 further rotates by an angle (e.g., 90°), the relative positional relationship between the magnetic ring 21 and the teeth 11' is as shown in FIG. 3C, where the critical points O of the four magnetic poles are directly opposite to shoes 112 of X1(1), X1(2), X1(3), and X1(4) respectively again. In this case, the intensity of the drive signal provided to the first phase wire X1 changes from positive to negative, and magnetic fields sequentially generated at X1(1), X1(2), X1(3), and X1(4) change from N-S-N-S to S-N-S-N. The intensity of the drive signal provided to the second phase wire X2 remains negative, and magnetic fields of S-N-S-N are still generated sequentially at X2(1), X2(2), X2(3), and X2(4). The magnetic ring 21 continues to rotate in the direction denoted by the arrow under the magnetic force.

The subsequent process is similar to that described above, so the details will not be repeated herein. As can be seen from the above description, the magnetic ring 21 can be continuously rotated in the same direction by respectively providing drive signals having an intensity whose sign changes in one period to the first phase wire X1 and the second phase wire X2.

It should be understood that the above description is an example where the drive signal provided to each phase wire 3 is commuted (i.e., changed between positive and negative) when the shoes 112 of the tooth groups 11 on which the phase wire 3 is wound are directly opposite to the critical points O of the magnetic poles, and in this case, the efficiency of the brushless motor can be improved. However, in some embodiments, the drive signal may be commutated when the shoes 112 are not directly opposite to the critical points O of the magnetic poles.

In the driving method for a brushless motor according to the present disclosure, N drive signals are provided to N phase wires 3 through first ends and second ends, which are independent of each other, of the N phase wires 3. As such, the torque provided by the brushless motor increases as N increases, and because the N drive signals are independent of each other, the control is still relatively simple. Thus, the brushless motor can be driven by simple control to provide a large torque.

In addition, according to the driving method for a brushless motor according to the embodiments of the present disclosure, drive signals may be provided to different numbers of phase wires 3 in different scenarios, to enable the brushless motor to operate in different working conditions. Thus, the universality of the brushless motor can be improved.

When 2≤N≤X, the driving method for a brushless motor according to the present disclosure may include two different modes, cross energization and alternate energization, depending on whether the N phase wires 3 are continuously energized in the same time interval. The two modes will be respectively described below.

First, the cross energization mode is described.

In the cross energization mode, the intensities of the N drive signals provided to the N phase wires 3 are always not 0 in a first time interval. In other words, the N phase wires 3 are continuously energized in the same first time interval, i.e., there is an overlap between time intervals in which the N phase wires 3 are continuously energized. Thus, the utilization rate of the windings and the core in the brushless motor can be improved.

Because two phase windings are energized and one phase winding is not energized in the same time interval, the utilization rate of the windings and the core in conventional three-phase brushless DC motors is only about 66%. For example, when N=X, the X phase wires 3 are continuously energized in the same first time interval, i.e., the utilization rate of the windings and the core in the brushless motor in the first time interval can reach an extreme utilization rate of 100%, which is higher than to that of conventional three-phase brushless DC motors.

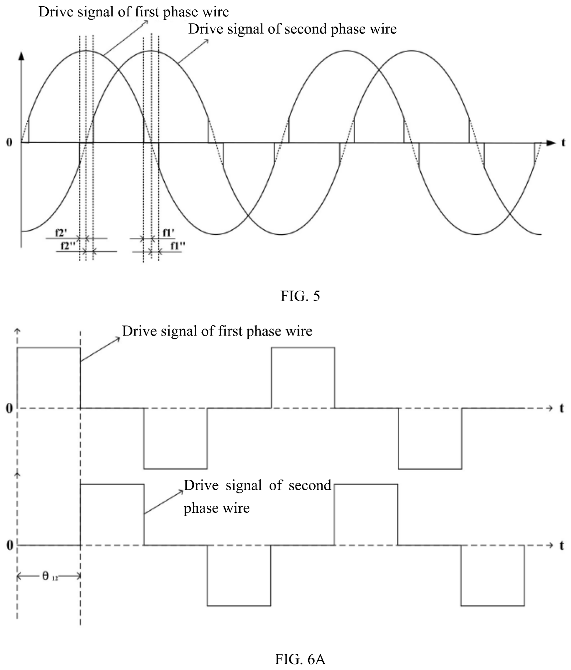

Some embodiments of the cross energization mode will be described below with reference to FIG. 4A, FIG. 4B, and FIG. 5. FIG. 4A is a waveform diagram of drive signals in the cross energization driving mode according to some embodiments of the present disclosure. FIG. 4B is a waveform diagram of drive signals in the cross energization driving mode according to some other embodiments of the present disclosure. FIG. 5 is a waveform diagram of drive signals in the cross energization driving mode according to some other embodiments of the present disclosure.

In some embodiments, a moment at which the first waveform having an intensity greater than 0 and the second waveform having an intensity less than 0 in each drive signal overlap is a first moment, and the intensity of each drive signal is always not 0 in any time interval other than the first moment in one period.

In other words, in these embodiments, the waveform of each of the provided drive signals is continuous. In other words, the intensity of each of the provided drive signals is not always 0 in any time interval, and is 0 only at the moment of changing between positive and negative (i.e., the first moment).

For example, referring to FIG. 4A and FIG. 4B, the waveform of the drive signal provided to each phase wire is a sine wave. At a first moment when the first waveform and the second waveform of the drive signal overlap, the intensity of the drive signal is 0. In any time interval other than the first moment, the intensity of the drive signal is always not 0.

FIG. 4A schematically shows a case where X=N=2. In this case, a phase difference between the drive signal of the first phase wire and the drive signal of the second phase wire is $\theta_{12}$.

FIG. 4B schematically shows a case where X=N=3. In this case, a phase difference between the drive signal of the first phase wire and the drive signal of the second phase wire is $\theta_{12}$, a phase difference between the drive signal of the second phase wire and a drive signal of a third phase wire is $\theta_{23}$, and a phase difference between the drive signal of the first phase wire and the drive signal of the third phase wire is $\theta_{13}$.

In these embodiments, the first time interval in which the N phase wires 3 are continuously energized at the same time is longer, such that the utilization rate of the windings and the core in the brushless motor can be further improved. For example, when N=X, the utilization rate of the windings and the core in the brushless motor can reach the extreme utilization rate of 100% for a longer time.

Further, when the N phase wires 3 are continuously energized, the jitter inside the stator core 1 is reduced, such that electromagnetic noise generated during operation of the brushless motor can be reduced, and the service life of bearings in the brushless motor can be extended.

In some implementations, as shown in FIG. 4A and FIG. 4B, in the cross energization mode, the N drive signals are all continuous sine waves. In this mode, a rotation of a pair of magnetic rings can be achieved by only two commutations for each drive signal. Given the same rotational speed and torque, a conventional three-phase brushless DC motor requires six commutations to achieve a rotation of a pair of magnetic rings.

Therefore, using drive signals having a sine-wave waveform to drive the brushless motor in the cross energization mode can reduce the requirement on the computing power of a chip providing the drive signals.

In some other embodiments, the intensity of each drive signal is always 0 in a second time interval in one period. In other words, in these embodiments, the waveform of each of the provided drive signals is intermittent rather than continuous.

In some implementations, the intensity of each drive signal is not 0 at any moment in one period except for the second time interval.

For example, referring to FIG. 5, the drive signal provided to the first phase wire and the drive signal provided to the second phase wire are both discontinuous waveforms, and the first waveform and the second waveform of each of the two drive signals conform to a sine function.

The drive signal of the first phase wire may be obtained by advancing a commutation position of a continuous sine wave signal by a phase angle of f1' and lagging the commutation position by a phase angle of f1", and the drive signal of the second phase wire may be obtained by advancing the commutation position of the continuous sine wave signal by a phase angle of f2' and lagging the commutation position by a phase angle of f2".

In this case, the intensity of each drive signal continues to be 0 in the time interval in which the commutation position is advanced and the time interval in which the commutation position is lagged, and is not 0 at any moment other than these time intervals.

As described above, the drive signal provided to each phase wire 3 is preferably commuted when the shoes 112 of the tooth groups 11 on which the phase wire 3 is wound are directly opposite to the critical points of the magnetic poles. However, in practice, due to various reasons (e.g., the average distribution angle of the magnetic ring of the brushless motor may have errors due to production, or the drive detection of the brushless motor may have errors), it is possible that the commutation cannot be precisely controlled to occur at the moment at which the shoes are directly opposite to the critical points of the magnetic poles, but is earlier or later than this moment to some extent. This will cause the winding to do useless work during the time interval between the time of commutation and the moment at which the shoes are directly opposite to the critical points of the magnetic poles, leading to reduced efficiency of the brushless motor.

By providing a drive signal whose intensity continues to be 0 in the second time interval and is not 0 at any moment other than the second time interval, the useless work done by the winding can be reduced, thereby improving the efficiency of the brushless motor.

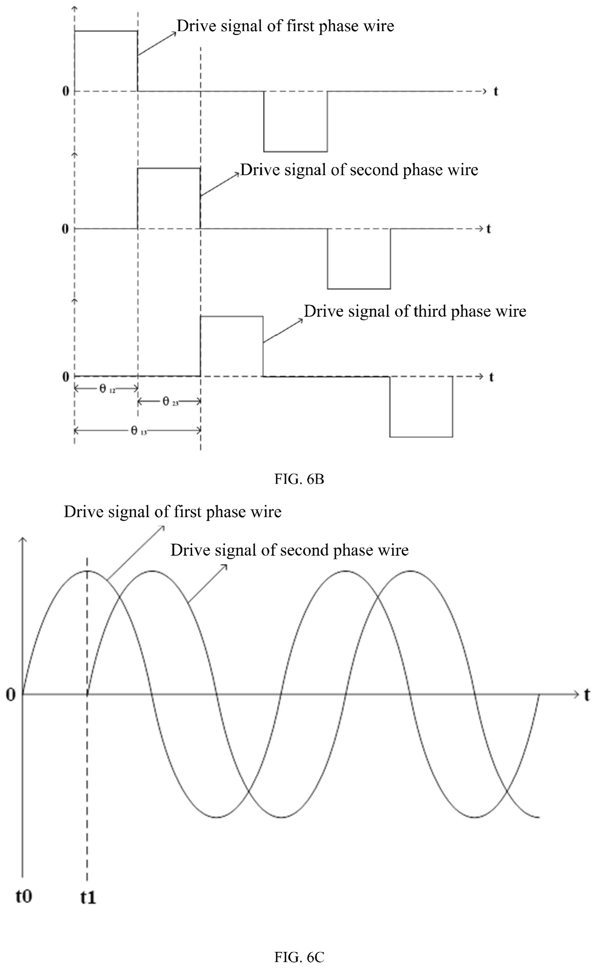

Next, the alternate energization driving mode will be described with reference to FIG. 6A and FIG. 6B. FIG. 6A is a waveform diagram of drive signals in an alternate energization driving mode according to some embodiments of the present disclosure. FIG. 6B is a waveform diagram of drive signals in an alternate energization driving mode according to some other embodiments of the present disclosure.

In the alternate energization mode, in a time interval within one period in which any one of the N drive signals has an intensity which is not 0 , the rest of the N drive signals have an intensity of 0, where $2 \leq N \leq X$.

In other words, in the alternate energization mode, each drive signal is intermittent and discontinuous, and there will not be two phase wires 3 continuously energized simultaneously in any time interval.

For example, referring to FIG. 6A and FIG. 6B, the waveform of the drive signal provided to each phase wire is a square wave. In a time interval in which the drive signal of any one of the phase wires is always not 0, the intensities of the drive signals of the other phase wires are 0. FIG. 6A schematically shows a case where X=N=2. FIG. 6B schematically shows a case where X=N=3.

Because there is only one drive signal with the intensity being always not 0 in the same time interval, driving the brushless motor in the alternate energization driving mode can further simplify the control.

The control with a drive signal having a square-wave waveform is simpler than that with drive signals having other waveforms. Therefore, in the alternate energization mode, using drive signals having a square-wave waveform to drive the brushless motor can further simplify the control.

So far, the cross energization driving mode and the alternate energization driving mode have been described.

It should be understood that the above descriptions are merely examples in which the drive signals in the cross energization driving mode conform to a sine function and the waveforms of the drive signals in the alternate energization driving mode are square waves, and the present disclosure is not limited thereto.

In some embodiments, the brushless motor may be driven using one of the cross energization driving mode and the alternate energization driving mode. In some other embodiments, the brushless motor may be driven using a combination of the cross energization driving mode and the alternate energization driving mode.

The driving method for a brushless motor according to some embodiments of the present disclosure will be further described below. It should be understood that these embodiments are applicable to both the cross energization driving mode and the alternate energization driving mode.

In some embodiments, when N is greater than or equal to 2, the magnetic ring 21 may be driven to rotate in different directions by adjusting the order in which the drive signals are provided to the N phase wires 3.

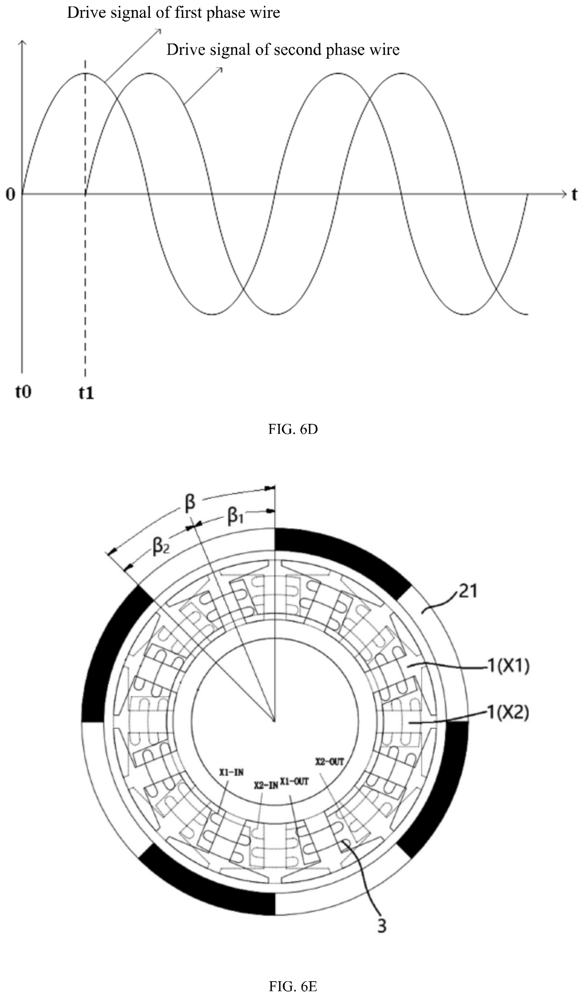

Cases shown in FIG. 6C and FIG. 6D will be described by way of example below. FIG. 6C and FIG. 6D are waveform diagrams of drive signals in the alternate energization driving mode according to some other embodiments of the present disclosure.

As shown in FIG. 6C, starting from time t0, the drive signal of the first phase wire is provided to the first phase wire, and from time t1 after time t0, the drive signal of the second phase wire is provided to the second phase wire. In other words, the drive signal of the first phase wire is first provided to the first phase wire, and then the drive signal of the second phase wire is provided to the second phase wire. In this case, the magnetic ring 21 may rotate in a first direction (e.g., clockwise).

As shown in FIG. 6D, starting from time t0, the drive signal of the second phase wire is provided to the second phase wire, and from time t1 after time t0, the drive signal of the first phase wire is provided to the first phase wire. In other words, the drive signal of the second phase wire is first provided to the second phase wire, and then the drive signal of the first phase wire is provided to the first phase wire. In this case, the magnetic ring 21 may rotate in a second direction opposite to the first direction (e.g., counterclockwise).

As such, the magnetic ring 21 can be driven to rotate in different directions by adjusting the order in which the drive signals are provided to the N phase wires 3, such that the universality of the brushless motor can be improved.

In some embodiments, the brushless motor includes one or more stator cores 1, and X phase wires 3 are wound on tooth groups 11 in a first circumferential direction of the stator core 1 in an order from a 1st phase wire to an Xth phase wire. The N phase wires include an ith phase wire and a kth phase wire.

In this case, a phase difference between a drive signal of the ith phase wire and a drive signal of the kth phase wire is $\theta_{ik} = \frac{P}{2}\sum_{i}^{k-1}\beta_X$, where 1≤i<k≤X. It should be understood that in the above formula, x is a variable, the value of which is any integer greater than or equal to i and less than or equal to k-1.

In some embodiments, $\theta_{ik}$ has a range of [1°, 180°). In some implementations, $\theta_{ik}$ has a range of [15°, 120°). For example, $\theta_{ik}$ may be an integer multiple of 15°, such as 15°, 30°, 45°, 60°, etc.

In each stator core 1, a spacing exists between the tooth group 11 of an xth phase wire and each of neighboring tooth groups 11 on two sides of the tooth group 11 of the xth phase wire.

For example, when the brushless motor includes one stator core 1, the neighboring tooth groups 11 on the two sides of the tooth group 11 of the xth phase wire are tooth groups 11 of other phase wires. For another example, when the brushless motor includes a plurality of stator cores 1 stacked in an axial direction thereof, the neighboring tooth groups 11 on the two sides of the tooth group 11 of the xth phase wire are tooth groups 11 of the same phase wire.

Each spacing has a center position in the first circumferential direction. Among all the spacings formed between the Z tooth groups 11, a central angle corresponding to an arc between the center position of the xth phase wire and each of the center positions neighboring to the center position of the xth phase wire in the first circumferential direction is $\beta_X$, and a sector corresponding to the arc includes at least a part of the tooth group 11 of the xth phase wire.

For example, referring to FIG. 6E, the brushless motor may include two stator cores 1 stacked in the axial direction, the first stator core 1 being denoted by solid lines and the second stator core 1 being denoted by dashed lines. In the first stator core 1, a spacing exists between two neighboring tooth groups. In the second stator core 1, a spacing also exists two neighboring tooth groups. In this case, a central angle $\beta_1$ of a 1st phase wire is a central angle corresponding to an arc between a central position of the 1st phase wire and a central position of a 2nd phase wire neighboring to the central position of the first phase wire in the first circumferential direction.

For ease of description, $\beta_X$ is briefly referred to as the central angle of the $x^{th}$ phase wire below.

For example, when X=2, i=1 and k=2, i.e., the phase difference between the drive signal of the first phase wire and the drive signal of the second phase wire is $\theta_{12} = \beta_1 \times P/2$.

For another example, when X=3, there are three cases regarding the values of i and k. In a first case, i=1 and k=2, i.e., the phase difference between the drive signal of the first phase wire and the drive signal of the second phase wire is $\theta_{12} = \beta_1 \times P/2$. In a second case, i=2 and k=3, i.e., the phase difference between the drive signal of the second phase wire and the drive signal of the third phase wire is $\theta_{23} = \beta_2 \times P/2$. In a third case, i=1 and k=3, i.e., the phase difference between the drive signal of the first phase wire and the drive signal of the third phase wire is $\theta_{13} = (\beta_1 + \beta_2)*P/2$.

Referring to FIG. 1A, the central angle $\beta_1$ of the first phase wire X1 is 45°, the central angle $\beta_2$ of the second phase wire X2 is 45°, and the pole number P of the magnetic ring 21 is 4.

In this case, referring to FIG. 4A and FIG. 6A, the phase difference between the drive signal of the first phase wire and the drive signal of the second phase wire is $\theta_{12} = 2 \times 45° = 90°$.

It should be understood that FIG. 1A merely schematically shows an example where the central angles of different phase wires 3 are equal, but the present disclosure is not limited thereto, as long as the sum of the central angles of the different phase wires 3 is equal to $\beta$. Referring to FIG. 1A, $\beta$ is a central angle of a single magnetic pole on the magnetic ring 21 in the first circumferential direction, which is equal to 360° divided by the pole number P.

Using the brushless motor shown in FIG. 1A as an example, when X=2 and P=4, $\beta$=90°. In other words, $\beta_1$ and $\beta_2$ may be any angle greater than 0° and less than 90°, as long as $\beta_1 + \beta_2$=90°.

In the above embodiments, the phase difference between the drive signals provided to any two phase wires 3 is determined according to the pole number of the magnetic ring 21 and structural parameters of the stator core 1. Thus, the operation of the brushless motor can be accurately and stably controlled.

As described above, drive signals may be provided to different numbers of phase wires 3, to enable the brushless motor to operate in different working conditions. In view of this, the present disclosure also provides a driving method for a brushless motor according to the following embodiments.

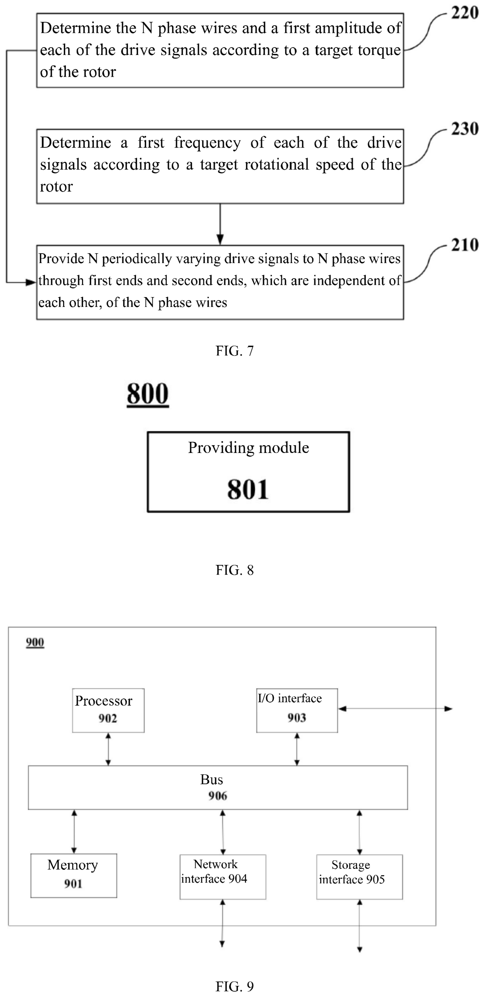

FIG. 7 is a schematic flowchart of a driving method for a brushless motor according to some other embodiments of the present disclosure.

As shown in FIG. 7, the driving method for a brushless motor further includes the following steps 220 and 230. The steps 220 and 230 may be executed before the step 210.

At step 220, the N phase wires and a first amplitude of each of the drive signals are determined according to a target torque of the rotor.

In some implementations, a larger target torque indicates a larger N. In some other implementations, a larger target torque indicates a larger first amplitude of each drive signal. In still some other implementations, a larger target torque indicates a larger N and a larger first amplitude of each drive signal.

At step 230, a first frequency of each of the drive signals is determined according to a target rotational speed of the rotor.

In some implementations, a higher target rotational speed indicates a higher first frequency of each drive signal.

As such, the N phase wires and the frequency and amplitude of each drive signal can be adjusted according to the target torque and the target rotational speed of the rotor to drive the brushless motor to operate in a working condition with the target torque and the target rotational speed.

In some embodiments, when the target torque of the rotor is higher than a first preset torque, N=X. In other words, when the target torque of the rotor is higher than the first preset torque, a drive signal is provided to each phase wire 3 of the brushless motor. As such, by providing a drive signal to each phase wire 3 of the brushless motor, the brushless motor can be driven to operate in a working condition with a high target torque.

In some implementations, when the target torque of the rotor is higher than the first preset torque, N=X, and the first amplitudes of the N drive signals are the same. As such, because the amplitudes of the drive signals provided to the phase wires 3 are the same, the brushless motor can be driven by simple control to operate in a condition with a high target torque.

In some embodiments, when the target torque of the rotor is lower than a second preset torque, N<X, and the first amplitudes of the N drive signals are the same. As such, because the amplitudes of the drive signals provided to the N phase wires 3 are the same, the brushless motor can be driven by simple control to operate in a condition with a low target torque.

In some other embodiments, when the target torque of the rotor is lower than the second preset torque, N=X, and at least two of the N drive signals have different first amplitudes. As such, by providing a drive signal having a larger magnitude to some of the X phase wires 3 and providing a drive signal having a smaller magnitude to the other wires 3, the brushless motor can be driven to operate in a working condition with a low target torque.

In some embodiments, the first frequency and the first amplitude of each of the N drive signals may be determined as follows.

First, a set of parameters required to achieve the target rotational speed and the target torque may be called from a plurality of sets of parameters. The set of parameters represents a second frequency and a second amplitude of each of the drive signals Then, the first frequency and the first amplitude of each of the drive signals may be determined according to the called set of parameters.

For example, each of the plurality of sets of parameters is used to enable the rotor to achieve a different rotational speed and torque. The plurality of sets of parameters may be pre-stored in a storage unit. The storage unit may be, for example, a Read-Only Memory (ROM).

After the current target rotational speed and target torque of the rotor in the brushless motor are acquired, a set of parameters matching the target rotational speed and the target torque may be called from the plurality of sets of parameters according to the target rotational speed and the target torque. Then, the second frequency and the second amplitude represented by the set of parameters may be tuned according to an actual operation status of the brushless motor (e.g., friction force, etc.) to obtain the first frequency and the first amplitude of each drive signal.

In these embodiments, a set of parameters required to enable the rotor to achieve the target rotational speed and the target torque may be directly called, and the first frequency and the first amplitude of each drive signal may be determined based on the set of parameters. As such, the amount of real-time calculation required for driving the brushless motor can be reduced.

An embodiment of the present disclosure further provides a driving apparatus for a brushless motor.

FIG. 8 is a schematic structural diagram of a driving apparatus for a brushless motor according to some embodiments of the present disclosure. The brushless motor includes a stator core 1, a rotor 2, and X phase wires 3, where X≥2. The stator core 1 includes Z tooth groups 11 spaced apart from each other in a first circumferential direction. The rotor 2 includes a magnetic ring 21 having a pole number P, P being an even number. The X phase wires 3 are wound on the tooth groups 11 to form coils 31, and Z=P×X.

In each of the phase wires 3, the coils 31 on two neighboring tooth groups 11 have opposite winding directions in a second circumferential direction of the tooth groups 11, and are spaced apart by X-1 tooth groups 11.

As shown in FIG. 8, the driving apparatus 800 for a brushless motor includes a providing module 801.

The providing module 801 is configured for providing N periodically varying drive signals to N phase wires 3 through first ends and second ends, which are independent of each other, of the N phase wires 3. Here, 1≤N≤X, and a waveform of each drive signal in one period includes a first waveform with an intensity greater than 0 and a second waveform with an intensity less than 0.

In some embodiments, the intensities of the N drive signals are always not 0 in a first time interval. In other words, the driving apparatus 800 for a brushless motor may drive the brushless motor in a cross energization mode.

In some other embodiments, 2≤N≤X, and in a time interval within one period in which any one of the N drive signals has an intensity which is not 0, the rest of the N drive signals have an intensity of 0. In other words, the driving apparatus 800 for a brushless motor may drive the brushless motor in an alternate energization mode.

It should be understood that the driving apparatus 800 for a brushless motor may further include various other modules to execute the driving method for a brushless motor according to any one of the embodiments described above. Reference can be made to the above description for details, which will not be repeated herein.

FIG. 9 is a schematic structural diagram of a driving apparatus for a brushless motor according to some other embodiments of the present disclosure.

As shown in FIG. 9, the driving apparatus 900 for a brushless motor includes a memory 901 and a processor 902 coupled to the memory 901. The processor 902 is configured for running instructions stored in the memory 901 to execute the driving method for a brushless motor according to any one of the above embodiments.

The memory 901 may include, for example, a system memory, a fixed non-volatile storage medium, or the like. The system memory may store, for example, an operating system, an application program, a boot loader, other programs, and the like.

The driving apparatus 900 may further include an input/output interface 903, a network interface 904, a storage interface 905, and the like. For example, the input/output interface 903, the network interface 904, and the storage interface 905 may be connected by a bus 906, and the memory 901 and the processor 902 may be connected by the bus 906. The input/output interface 903 provides a connection interface for an input/output device such as a display, a mouse, a keyboard, or a touch screen. The network interface 904 provides a connection interface for various networked devices. The storage interface 905 provides a connection interface for an external storage device such as a secure digital (SD) card or a Universal Serial Bus (USB) flash drive.

An embodiment of the present disclosure further provides a computer-readable storage medium, having computer program instructions stored therein. The computer program instructions, when executed by a processor, cause the processor to implement the driving method for a brushless motor according to any one of the above embodiments.

An embodiment of the present disclosure further provides a driving circuit for a brushless motor. The brushless motor includes a stator core 1, a rotor 2, and X phase wires 3, where X≥2. The stator core 1 includes Z tooth groups 11 spaced apart from each other in a first circumferential direction. The rotor 2 includes a magnetic ring 21 having a pole number P, P being an even number. The X phase wires 3 are wound on the tooth groups 11 to form coils 31, and Z=P×X. In each of the phase wires 3, the coils 31 on two neighboring tooth groups 11 have opposite winding directions in a second circumferential direction of the tooth groups 11, and are spaced apart by X-1 tooth groups 11.

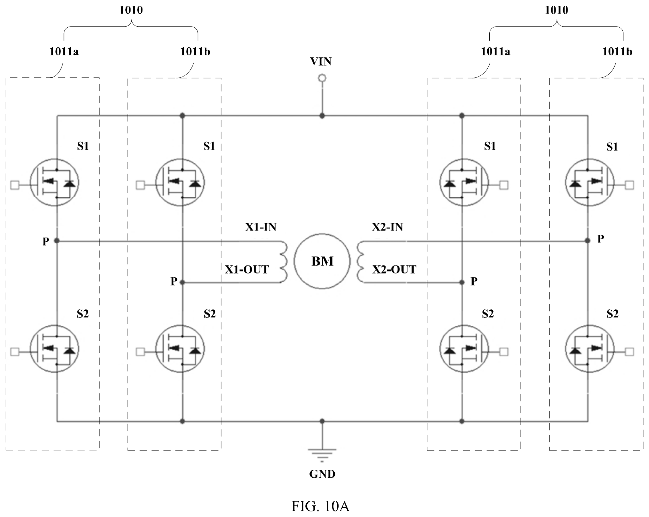

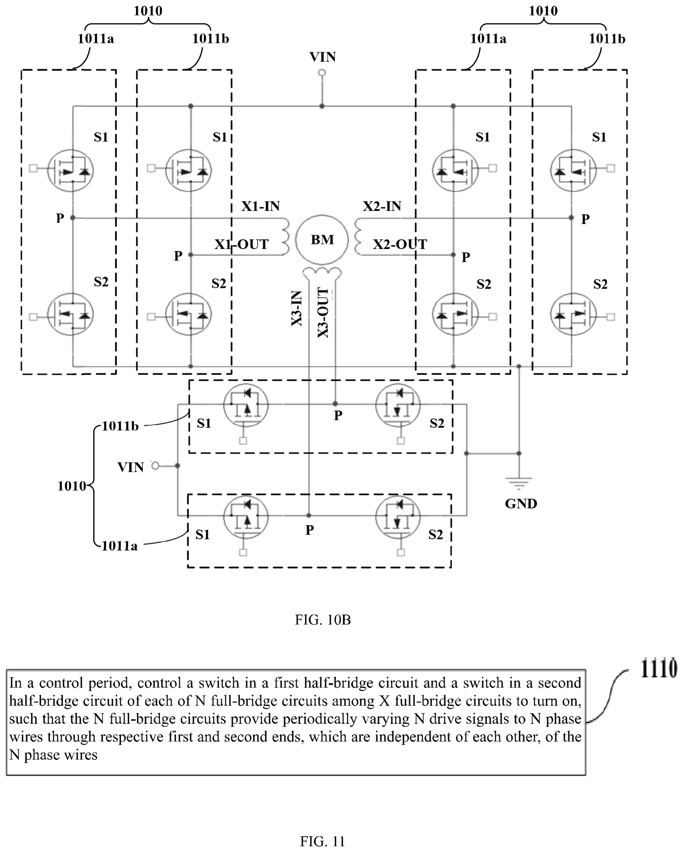

FIG. 10A is a schematic structural diagram of a driving circuit for a brushless motor according to some embodiments of the present disclosure. FIG. 10B is a schematic structural diagram of a driving circuit for a brushless motor according to some other embodiments of the present disclosure.

FIG. 10A shows a case where X=2. FIG. 10B shows a case where X=3. Referring to FIG. 10A and FIG. 10B, the driving circuit for a brushless motor includes X full-bridge circuits 1010. Each full-bridge circuit 1010 includes two half-bridge circuits 1011 connected in parallel between an input terminal VIN and a ground terminal GND of the driving circuit.

Each half-bridge circuit 1011 includes two switches S1 and S2 connected by a node P. The switches S1 and S2 may each be, for example, a thyristor (or referred to as a silicon controlled rectifier), a metal-oxide-semiconductor field effect transistor (MOSFET), an insulated gate bipolar transistor (IGBT), or the like.

The two half-bridge circuits 1011 in each full-bridge circuit 1010 include a first half-bridge circuit 1011a and a second half-bridge circuit 1011b. A node P of a first half-bridge circuit 1011a of an $i^{th}$ full-bridge circuit 1010 is configured for connecting to a first end of an $i^{th}$ phase wire, and a node P of a second half-bridge circuit 1011b of the $i^{th}$ full-bridge circuit 1010 is configured for connecting to a second end of the $i^{th}$ phase wire 3. 1≤i≤X.

In other words, the X full-bridge circuits 1010 correspond one-to-one to the X phase wires 3 in the brushless motor BM. The node P of the first half-bridge circuit 1011a in each full-bridge circuit 1010 is connected to a first end of a corresponding phase wire 3, and the node P of the second half-bridge circuit 1011b in the full-bridge circuit 1010 is connected to a second end of the corresponding phase wire 3.

For example, referring to FIG. 10A, nodes P of two first half-bridge circuits 1011a are respectively connected to a first end X1-IN of a first phase wire and a first end X2-IN of a second phase wire, and nodes P of two second half-bridge circuits 1011b are respectively connected to a second end X1-OUT of the first phase wire and a second end X2-OUT of the second phase wire.

For another example, referring to FIG. 10B, nodes P of three first half-bridge circuits 1011a are respectively connected to a first end X1-IN of a first phase wire, a first end X2-IN of a second phase wire, and a first end X3-IN of a third phase wire, and nodes P of three second half-bridge circuits 1011b are respectively connected to a second end X1-OUT of the first phase wire, a second end X2-OUT of the second phase wire, and a second end X3-OUT of the third phase wire.

By controlling the respective states of the switches S1 and S2 in the driving circuit for a brushless motor according to the above embodiments, the driving circuit can provide N drive signals to N phase wires of the brushless motor according to the driving method for a brushless motor according to any one of the above embodiments.

In some embodiments, N full-bridge circuits 1010 among the X full-bridge circuits 1010 are configured for providing N periodically varying drive signals to N phase wires 3 through first ends and second ends, which are independent of each other, of the N phase wires 3 in a control period, where 1≤N≤X.

A waveform of each drive signal in one period includes a first waveform with an intensity greater than 0 and a second waveform with an intensity less than 0. In some embodiments, the N drive signals provided by the driving circuit have the same frequency.

For example, among the two switches S1 and S2 of each half-bridge circuit 1011, the first switch S1 is connected to the input terminal VIN of the driving circuit, and the second switch S2 is connected to the ground terminal GND of the driving circuit.

In this case, by controlling the first switch S1 and the second switch S2 in the first half-bridge circuit 1011a of the $i^{th}$ full-bridge circuit 1010 to respectively turn on and turn off and controlling the second switch S2 and the first switch S1 in the second half-bridge circuit 1011b of the $i^{th}$ full-bridge circuit 1010 to respectively turn on and turn off, the $i^{th}$ full-bridge circuit 1010 can be controlled to provide a first waveform having an intensity greater than 0 to the $i^{th}$ phase wire.

By controlling the first switch S1 and the second switch S2 in the second half-bridge circuit 1011b of the $i^{th}$ full-bridge circuit 1010 to respectively turn on and turn off and controlling the second switch S2 and the first switch S1 in the first half-bridge circuit 1011a of the $i^{th}$ full-bridge circuit 1010 to respectively turn on and turn off, the $i^{th}$ full-bridge circuit 1010 can be controlled to provide a second waveform having an intensity less than 0 to the $i^{th}$ phase wire.

In some embodiments, the first switch S1 connected to the input terminal VIN of the driving circuit is one of an n-type MOSFET and a P-type MOSFET, and the second switch S2 connected to the ground terminal GND of the driving circuit is an n-type MOSFET. For example, the first switch S1 is an n-type MOSFET. For another example, the first switch S1 is a p-type MOSFET. Thus, the stability of driving can be improved.

In some embodiments, at least two of the N drive signals provided by the driving circuit have different amplitudes. In some other embodiments, the N drive signals provided by the driving circuit have the same amplitude.

In some embodiments, the first waveform and the second waveform of each drive signal provided by the driving circuit are centrosymmetric.

In some embodiments, waveforms of the N drive signals provided by the driving circuit are square waves. In some other embodiments, the first waveform and the second waveform conform to a sine function.

In some embodiments, the X phase wires 3 are wound on the tooth groups 11 in the first circumferential direction in an order from a $1^{st}$ phase wire to an $X^{th}$ phase wire. The N phase wires include an $i^{th}$ phase wire and a $k^{th}$ phase wire.

A phase difference between a drive signal of the $i^{th}$ phase wire and a drive signal of the $k^{th}$ phase wire that are provided by the driving circuit is $\theta_{ik} = \frac{P}{2}\sum_{i}^{k-1}\beta_X$, where $1 \leq i < k \leq X$.

In each stator core 1, a spacing exists between the tooth group 11 of an $x^{th}$ phase wire and each of neighboring tooth groups 11 on two sides of the tooth group 11 of the $x^{th}$ phase wire. The spacing has a center position in the first circumferential direction.

Among all the spacings formed between the Z tooth groups 11, a central angle corresponding to an arc between the center position of the $x^{th}$ phase wire and each of the center positions neighboring to the center position of the $x^{th}$ phase wire in the first circumferential direction is $\beta_X$, and a sector corresponding to the arc includes at least a part of the tooth group 11 of the $x^{th}$ phase wire.

In some implementations, the driving circuit for a brushless motor provides the N drive signals to the N phase wires 3 in a cross energization mode.

In these implementations, the intensities of the N drive signals are always not 0 in a first time interval. In other words, the intensities of the N drive signals are always not 0 in the same time interval.

In some embodiments, a moment at which the first waveform and the second waveform of each drive signal provided by the driving circuit overlap is a first moment, and the intensity of each drive signal is always not 0 in any time interval other than the first moment in one period. In other words, each drive signal is continuous and not intermittent.

In some other embodiments, the intensity of each drive signal provided by the driving circuit is always 0 in a second time interval in one period. In other words, the drive signals are intermittent. In some implementations, the intensity of each drive signal provided by the driving circuit is not 0 at any moment in one period except for the second time interval.

In some other implementations, the driving circuit for a brushless motor provides the N drive signals to the N phase wires 3 in an alternate energization mode.

In these implementations, in a time interval within one period in which any one of the N drive signals has an intensity which is not 0, the rest of the N drive signals have an intensity of 0. In other words, the intensities of any two of the drive signals provided by the driving circuit are not simultaneously always 0.

FIG. 11 is a schematic flowchart of a method for controlling a driving circuit for a brushless motor according to some embodiments of the present disclosure.

As shown in FIG. 11, the method for controlling a driving circuit for a brushless motor includes the following step 1110.

At step 1110, in a control period, a switch in a first half-bridge circuit and a switch in a second half-bridge circuit of each of N full-bridge circuits among X full-bridge circuits are controlled to turn on, such that the N full-bridge circuits provide periodically varying N drive signals to N phase wires through respective first and second ends, which are independent of each other, of the N phase wires.

Herein, $1 \leq N \leq X$, and a waveform of each drive signal in one period includes a first waveform with an intensity greater than 0 and a second waveform with an intensity less than 0.

As such, N full-bridge circuits in the driving circuit for a brushless motor according to any one of the above embodiments can be controlled to provide N periodically varying drive signals to N phase wires 3 through first ends and second ends, which are independent of each other, of the N phase wires 3.

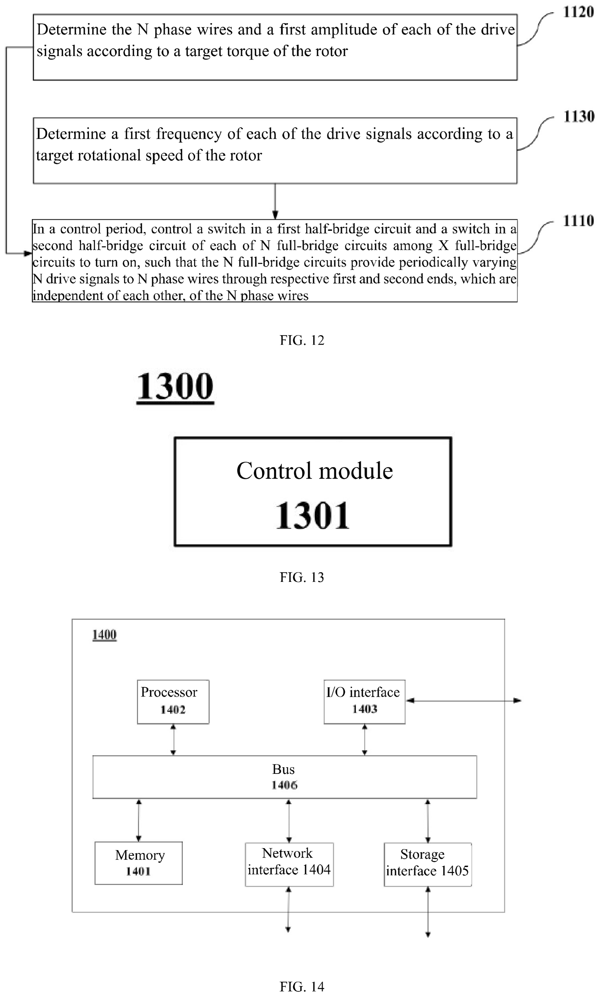

FIG. 12 is a schematic flowchart of a method for controlling a driving circuit for a brushless motor according to some other embodiments of the present disclosure.

As shown in FIG. 12, the method for controlling a driving circuit for a brushless motor further includes the following steps 1120 to 1130.

At step 1120, the N phase wires and a first amplitude of each of the drive signals are determined according to a target torque of the rotor.

At step 1130, a first frequency of each of the drive signals is determined according to a target rotational speed of the rotor.

The steps 1120 and 1130 may be executed before the step 1110.

As such, the driving circuit can be controlled according to the target torque and the target rotational speed of the rotor, to enable the driving circuit to provide N drive signals capable of driving the brushless motor to operate in a working condition with the target torque and the target rotational speed.

In some embodiments, when the target torque is higher than a first preset torque, N=X. In some implementations, when the target torque is higher than the first preset torque, the first amplitudes of the N drive signals are the same.

In some embodiments, when the target torque is lower than a second preset torque, N<X, and the first amplitudes of the N drive signals are the same. In some other embodiments, when the target torque is lower than the second preset torque, N=X, and at least two of the N drive signals have different first amplitudes.

In some embodiments, a set of parameters required to achieve the target rotational speed and the target torque is called from a plurality of sets of parameters, where the set of parameters represents a second frequency and a second amplitude of each of the drive signals; and then, the first frequency and the first amplitude of each of the drive signals is determined according to the called set of parameters.

The method for controlling a driving circuit for a brushless motor substantially corresponds to the above embodiments of the driving method for a brushless motor, and therefore is briefly described herein. Reference can be made to the above description for details.

An embodiment of the present disclosure further provides an apparatus for controlling a driving circuit for a brushless motor.

FIG. 13 is a schematic structural diagram of an apparatus for controlling a driving circuit for a brushless motor according to some embodiments of the present disclosure.

As shown in FIG. 13, the apparatus 1300 for controlling a driving circuit for a brushless motor includes a control module 1301.

The control module 1301 is configured for controlling, in a control period, a switch in a first half-bridge circuit and a switch in a second half-bridge circuit of each of N full-bridge circuits among X full-bridge circuits to turn on, such that the N full-bridge circuits provide periodically varying N drive signals to N phase wires through respective first and second ends, which are independent of each other, of the N phase wires.

Herein, 1≤N≤X, and a waveform of each drive signal in one period includes a first waveform with an intensity greater than 0 and a second waveform with an intensity less than 0.

In some embodiments, the control module 1301 is configured for controlling the driving circuit to provide drive signals to the brushless motor in a cross energization mode. In some other embodiments, the control module 1301 is configured for controlling the driving circuit to provide drive signals to the brushless motor in an alternate energization mode.

It should be understood that the apparatus 1300 may further include various other modules to execute the method for controlling a driving circuit for a brushless motor according to any one of the above embodiments.

FIG. 14 is a schematic structural diagram of an apparatus for controlling a driving circuit for a brushless motor according to some other embodiments of the present disclosure.

As shown in FIG. 14, the apparatus 1400 for controlling a driving circuit for a brushless motor includes a memory 1401 and a processor 1402 coupled to the memory 1401. The processor 1402 is configured for running instructions stored in the memory 1401 to execute the method for controlling a driving circuit for a brushless motor according to any one of the above embodiments.

The memory 1401 may include, for example, a system memory, a fixed non-volatile storage medium, or the like. The system memory may store, for example, an operating system, an application program, a boot loader, other programs, and the like.

The apparatus 1400 may further include an input/output interface 1403, a network interface 1404, a storage interface 1405, and the like. For example, the input/output interface 1403, the network interface 1404, and the storage interface 1405 may be connected by a bus 1406, and the memory 1401 and the processor 1402 may be connected by the bus 1406. The input/output interface 1403 provides a connection interface for an input/output device such as a display, a mouse, a keyboard, or a touch screen. The network interface 1404 provides a connection interface for various networked devices. The storage interface 1405 provides a connection interface for an external storage device such as a secure digital (SD) card or a Universal Serial Bus (USB) flash drive.

An embodiment of the present disclosure further provides a driving system for a brushless motor. The driving system includes a driving circuit for a brushless motor according to any one of the above embodiments and an apparatus for controlling a driving circuit for a brushless motor according to any one of the above embodiments (e.g., the apparatus 1300/1400). The apparatus may be, for example, a microcontroller unit (MCU).

In some embodiments, the X full-bridge circuits in the driving circuit for a brushless motor are respectively packaged in X chips, i.e., each full-bridge circuit is packaged in one chip. In some other embodiments, the X full-bridge circuits in the driving circuit for a brushless motor are packaged in one chip.

In some embodiments, the apparatus for controlling a driving circuit for a brushless motor and the driving circuit are packaged in different chips.

In some other embodiments, the apparatus for controlling a driving circuit for a brushless motor and the driving circuit are packaged in the same chip. For example, the X full-bridge circuits are packaged in X chips in one-to-one correspondence, and each chip may further package a sub-control apparatus for controlling the full-bridge circuit in the chip. In this case, the apparatus for controlling a driving circuit for a brushless motor includes all the sub-control apparatuses packaged in the X chips.

In some embodiments, the driving system further includes X Hall detection elements. For example, the X Hall detection elements and the X full-bridge circuits may be packaged in the same chip. For another example, each Hall detection element and a full-bridge circuit corresponding to the Hall detection element may be packaged in one chip.

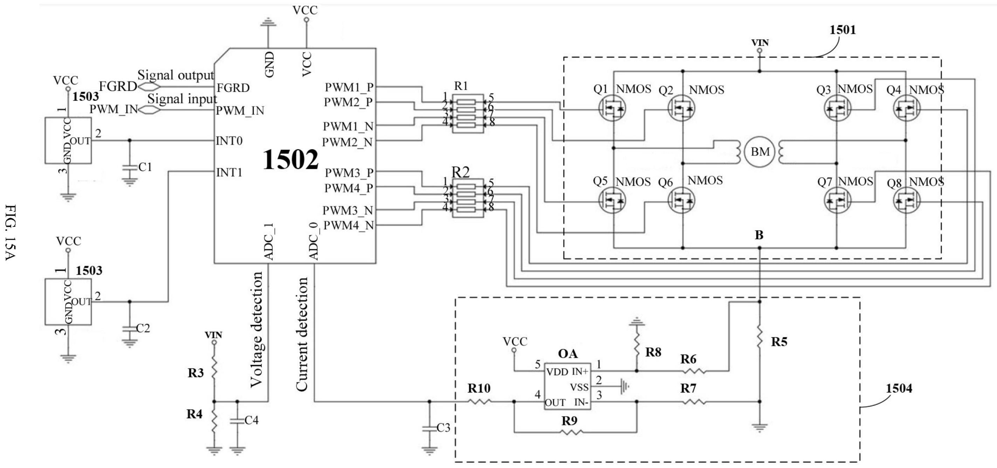

FIG. 15A is a schematic circuit diagram of a driving system for a brushless motor according to some embodiments of the present disclosure.

As shown in FIG. 15A, the driving system for a brushless motor includes a driving circuit 1501 for a brushless motor and an apparatus 1502 for controlling a driving circuit for a brushless motor.

FIG. 15A schematically shows that the driving circuit 1501 includes two full-bridge circuits each including four switches, i.e., the driving circuit includes a total of eight switches (all shown as n-type MOSFETs in FIG. 15A). The eight switches are denoted by Q1, Q2, Q3, Q4, Q5, Q6, Q7, and Q8, respectively.

The apparatus 1502 is configured for controlling a state of each of the switches Q1 to Q8 in the driving circuit 1501.

Referring to FIG. 15A, eight terminals PWM1_P, PWM2_P, PWM1_N, PWM2_N, PWM3_P, PWM4_P, PWM3_N, and PWM4_N of the apparatus 1502 are respectively connected to gates of the switches Q1 to Q8. For example, the terminals PWM1_P, PWM2_P, PWM1_N, and PWM2_N are respectively connected to the gates of the switches Q1, Q2, Q5, and Q6 in the first full-bridge circuit by four resistors in a resistor array R1, and the terminals PWM3_P, PWM4_P, PWM3_N, and PWM4_N are respectively connected to the gates of the switches Q3, Q4, Q7, and Q8 in the second full-bridge circuit by four resistors in a resistor array R2. The apparatus 1502 may output pulse width modulation (PWM) signals through the eight terminals to control the states of the switches Q1 to Q8.

In some embodiments, the apparatus 1502 is further configured for controlling the state of each switch in the driving circuit 1501 according to a Hall detection signal.

For example, referring to FIG. 15A, the apparatus 1502 may be respectively connected to two Hall detection elements 1503 by terminals INT0 and INT1 to acquire Hall detection signals from the Hall detection elements 1503. Each Hall detection element 1503 may include a supply voltage terminal VCC, a ground terminal GND, and a Hall detection signal output terminal OUT.

In some embodiments, the apparatus 1502 is further configured for detecting a current and a voltage of the driving circuit 1501 to ensure that the driving circuit 1501 operates within a reliable voltage range and a reliable current range, thereby improving the reliability of the driving circuit 1501.

For example, referring to FIG. 15A, the apparatus 1502 may detect the current of the driving circuit 1501 through a terminal ACC_0 and detect the voltage of the driving circuit 1501 through a terminal ACC_1.

The driving system may further include a voltage divider circuit including two resistors R3 and R4 connected in series between an input terminal VIN and a ground terminal GND of the driving circuit 1501. The terminal ACC_1 is connected to an intermediate node between the resistors R3 and R4 to detect the voltage of the driving circuit 1501.

The driving system may further include a current detection circuit 1504 shown in FIG. 15A. The current detection circuit 1504 includes an operational amplifier OA and a plurality of resistors R5, R6, R7, R8, R9, and R10. The operational amplifier OA includes power terminals VDD and VSS, a positive input terminal IN+, a negative input terminal IN-, and an output terminal OUT.

The resistor R5 is connected between a node B and the ground terminal as shown in FIG. 15A. One end of the resistor R6 is connected to one end of the resistor R5 connected to the node B, and the other end of the resistor R6 is connected to the positive input IN+ of the operational amplifier OA. One end of the resistor R7 is connected to one end of the resistor R5 which is grounded, and the other end of the resistor R7 is connected to the negative input terminal IN- of the operational amplifier OA. One end of the resistor R8 is connected to one end of the resistor R6 connected to the positive input terminal IN+, and the other end of the resistor R8 is grounded. One end of the resistor R9 is connected to one end of the resistor R7 connected to the negative input terminal IN-, and the other end of the resistor R9 is connected to the output terminal OUT of the operational amplifier OA. The resistor R10 is connected between the output terminal OUT of the operational amplifier OA and the terminal ACC_0 of the apparatus 1502.

As shown in FIG. 15A, the driving system may further include a plurality of capacitors C1, C2, C3, and C4 each having one end grounded. The other end of the capacitor C1 is connected to an intermediate node between one of the Hall detection elements 1503 and the apparatus 1502. The other end of the capacitor C2 is connected to an intermediate node between the other Hall detection element 1503 and the apparatus 1502. The other end of the capacitor C3 is connected to an intermediate node between the current detection circuit 1504 and the apparatus 1502. The other end of the capacitor C4 is connected to an intermediate node between the voltage divider circuit and the apparatus 1502.

The apparatus 1502 may further include other terminals, e.g., a signal input terminal FGRD, a signal output terminal PWM_IN, a supply voltage terminal VCC, and a ground terminal GND, which will not be described in detail herein.

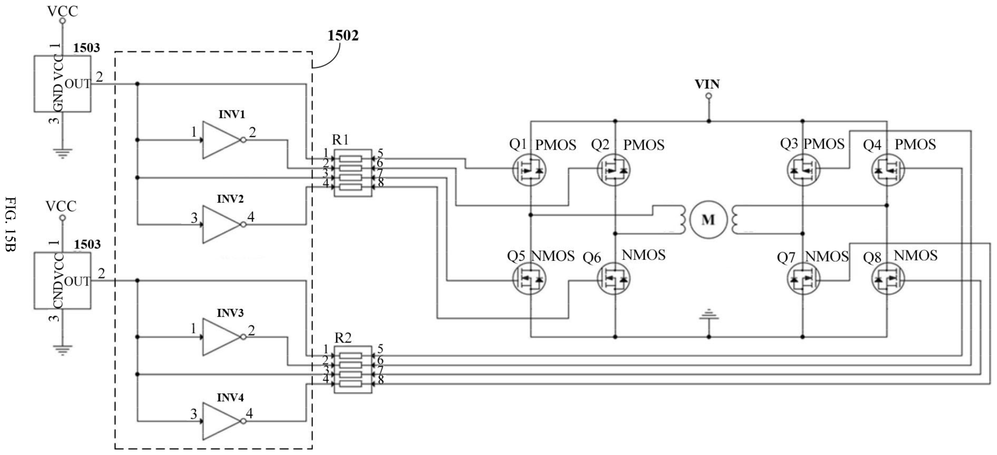

FIG. 15B is a schematic circuit diagram of a driving system for a brushless motor according to some other embodiments of the present disclosure.

Parts in FIG. 15B that are similar to those in FIG. 15A will not be described in detail herein again. Different from FIG. 15A, the switches Q1 to Q4 in FIG. 15B are p-type MOSFETs.

As described above, in an alternate energization mode, providing drive signals having a square-wave waveform to the wires can further simplify the control. As such, the internal circuit of the apparatus 1502 is relatively simple.

As shown in FIG. 15B, the apparatus 1502 includes four inverters INV1, INV2, INV3, and INV4. Each Hall detection element 1503 is respectively connected to two resistors in the corresponding resistor array by two inverters, and each Hall detection element 1503 is further directly connected to the other two resistors in the corresponding resistor array.

In these implementations, the driving circuit 1501 can be controlled by the apparatus 1502 with a simple internal circuit.

In FIG. 15A and FIG. 15B, numerals indicating the serial numbers of terminals of some elements are also marked next to the elements. For example, numerals 1, 2, and 3 next to the Hall detection element 1503 respectively represent the first terminal (i.e., the supply voltage terminal VCC), the second terminal (i.e., the output terminal OUT), and the third terminal (i.e., the ground terminal GND) of the Hall detection element 1503.

An embodiment of the present disclosure further provides a driving circuit for a brushless motor. The brushless motor includes a stator core 1, a rotor 2, and X phase wires 3, where X≥2. The stator core 1 includes Z tooth groups 11 spaced apart from each other in a first circumferential direction. The rotor 2 includes a magnetic ring 21 having a pole number P, P being an even number. The X phase wires 3 are wound on the tooth groups 11 to form coils 31, and Z=P×X. In each of the phase wires 3, the coils 31 on two neighboring tooth groups 11 have opposite winding directions in a second circumferential direction of the tooth groups 11, and are spaced apart by X-1 tooth groups 11.

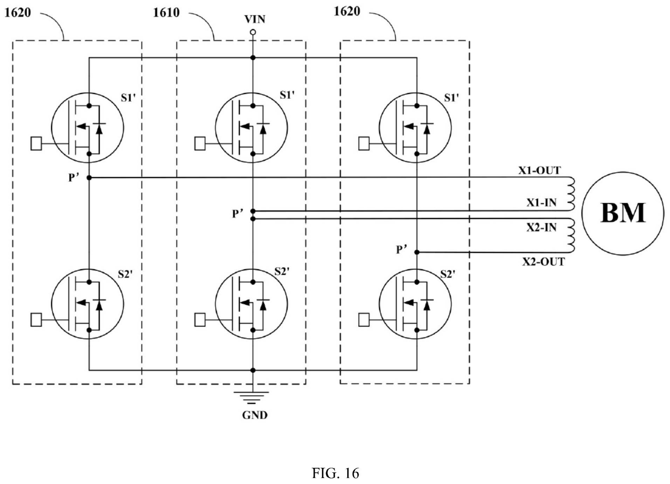

FIG. 16 is a schematic structural diagram of a driving circuit for a brushless motor according to some other embodiments of the present disclosure.

FIG. 16 shows a case where X=2. Referring to FIG. 16, the driving circuit for a brushless motor includes a first half-bridge circuit 1610 and X second half-bridge circuits 1620. The first half-bridge circuit 1610 and the X second half-bridge circuits 1620 are connected in parallel between an input terminal VIN and a ground terminal GND of the driving circuit.

Each of the first half-bridge circuit 1610 and the X second half-bridge circuits 1620 includes two switches S1' and S2' connected by a node P'. The switches S1' and S2' may be, for example, thyristors, MOSFETs, IGBTs, or the like. For example, the switch S1' may be one of an n-type MOSFET and a p-type MOSFET, and the switch S2' is an n-type MOSFET.

In these embodiments, the node P' of the first half-bridge circuit 1610 is configured for connecting to first ends of X phase wires 3, and the node P' of an i$^{th}$ second half-bridge circuit 1620 of the X second half-bridge circuits 1620 is configured for connecting to a second end of an i$^{th}$ phase wire 3. 1≤i≤X.

For example, referring to FIG. 16, the node P' of the first half-bridge circuit 1610 is connected to a first end X1-IN of a first phase wire and is connected to a first end X2-IN of a second phase wire. The node P' of the first second half-bridge circuit 1620 is connected to a second end X1-OUT of the first phase wire, and the node P' of the second half-bridge circuit 1620 is connected to a second end X2-OUT of the second phase wire.

The driving circuit is configured for providing N periodically varying drive signals to N phase wires 3 through first ends and second ends, which are independent of each other, of the N phase wires 3 in a control period, where 2≤N≤X.

A waveform of each drive signal in one period includes a first waveform with an intensity greater than 0 and a second waveform with an intensity less than 0, and in a time interval within one period in which any one of the N drive signals has an intensity which is not 0, the rest of the N drive signals have an intensity of 0.

In other words, the driving circuit is configured for providing N drive signals to N phase wires 3 to drive the brushless motor in an alternate energization mode.

For example, by controlling the switch S1' and the switch S2' of a second half-bridge circuit 1620 to respectively turn on and turn off and controlling the switch S1' and the switch S2' of the first half-bridge circuit 1610 to respectively turn off and turn on, the driving circuit can be enabled to provide a first waveform having an intensity greater than 0 to a phase wire connected to the node P' of the second half-bridge circuit 1620.

By controlling the switch S1' and the switch S2' of a second half-bridge circuit 1620 to respectively turn off and turn on and controlling the switch S1' and the switch S2' of the first half-bridge circuit 1610 to respectively turn on and turn off, the driving circuit can be enabled to provide a second waveform having an intensity less than 0 to a phase wire connected to the node P' of the second half-bridge circuit 1620.

Given the same number X of wires in the brushless motor, the driving circuits of these embodiments require fewer half-bridge circuits. Using such a driving circuit to drive the brushless motor in an alternate energization mode can reduce the costs and the volume of the driving circuit.

An embodiment of the present disclosure further provides a device, including the driving apparatus for a brushless motor according to any one of the above embodiments and the brushless motor according to any one of the above embodiments.

An embodiment of the present disclosure further provides a device, including the driving circuit for a brushless motor according to any one of the above embodiments and the brushless motor according to any one of the above embodiments.

An embodiment of the present disclosure further provides a device, including the driving system for a brushless motor according to any one of the above embodiments and the brushless motor according to any one of the above embodiments.

The device according to any of the above embodiments may be, for example, a vehicle, an electrical appliance (such as a household electrical appliance), or any other device capable of converting electrical energy into mechanical energy.

An embodiment of the present disclosure further provides a computer program product including a computer program. The computer program, when executed by a processor, cause the processor to execute the driving method for a brushless motor according to any one of the above embodiments or the method for controlling a driving circuit for a brushless motor according to any one of the above embodiments.

The various embodiments of the present disclosure have been described in detail. To avoid obscuring the concept of the present disclosure, certain details known in the art have not been described. Based on the above description, those having ordinary skills in the art can fully understand how to implement the technical schemes disclosed herein.

Each embodiment in this specification is described in a progressive manner, with each embodiment focusing on the differences from other embodiments. For the same or similar parts between the various embodiments, reference may be made to each other. As for the device and circuit embodiments, since they basically correspond to the method embodiments, the descriptions are relatively concise, and reference may be made to the relevant parts of the method embodiments for related content.

Those having ordinary skills in the art should understand that the embodiments of the present disclosure may be provided as a method, a system, or a computer program product. Accordingly, the present disclosure may take the form of an entirely hardware embodiment, an entirely software embodiment, or an embodiment combining software and hardware aspects. Furthermore, the present disclosure may take the form of a computer program product implemented on one or more non-transitory computer-readable storage media (including, but not limited to disk storage, CD-ROM, optical storage, etc.) containing computer-usable program codes.

The present disclosure is described with reference to flowcharts and/or block diagrams of methods, devices (systems), and computer program products according to the embodiments of the present disclosure. It should be understood that the functions specified in one or more processes in the flowcharts and/or one or more blocks in the block diagrams may be implemented by computer program instructions. These computer program instructions may be provided to a processor of a general-purpose computer, a special-purpose computer, an embedded processor, or another programmable data processing device to produce a machine, such that the instructions executed by the processor of the computer or another programmable data processing device generate means for implementing the functions specified in one or more processes in the flowcharts and/or one or more blocks in the block diagrams.

These computer program instructions may also be stored in a computer-readable memory that can direct a computer or another programmable data processing device to operate in a specific manner, such that the instructions stored in the computer-readable memory produce an article of manufacture including instruction means that implement the functions specified in one or more processes in the flowcharts and/or one or more blocks in the block diagrams.

These computer program instructions may also be loaded onto a computer or another programmable data processing device, such that a series of operational steps are performed on the computer or another programmable device to produce a computer-implemented process, thereby causing the instructions executed on the computer or another programmable device to provide steps for implementing the functions specified in one or more processes in the flowcharts and/or one or more blocks in the block diagrams.

Although some specific embodiments of the present disclosure have been described in detail by way of examples, those having ordinary skills in the art should understand that the foregoing examples are only for description and are not intended to limit the scope of the present disclosure. Those having ordinary skills in the art should appreciate that modifications may be made to the foregoing embodiments or equivalent replacements can be made to some technical features without departing from the scope and gist of the present disclosure. The scope of protection of the present disclosure is defined by the appended claims.

## Claims

1. A driving method for a brushless motor, wherein the brushless motor comprises:

   a stator core (1), comprising Z tooth groups (11) spaced apart from each other in a first circumferential direction;
   a rotor (2), comprising a magnetic ring (21) having a pole number P, P being an even number; and
   X phase wires (3), wound on the tooth groups (11) to form coils (31), X≥2, and Z=P×X, wherein in each of the phase wires (3), the coils (31) on two neighboring tooth groups (11) have opposite winding directions in a second circumferential direction of the tooth groups (11), and are spaced apart by X-1 tooth groups (11),
   the driving method comprises:
   providing N periodically varying drive signals to N phase wires (3) through first ends and second ends, which are independent of each other, of the N phase wires (3), wherein a waveform of each drive signal in one period comprises a first waveform with an intensity greater than 0 and a second waveform with an intensity less than 0, and 1≤N≤X.

2. The method of claim 1, wherein 2≤N≤X, and intensities of the N drive signals are always not 0 in a first time interval.

3. The method of claim 1, wherein a moment at which the first waveform and the second waveform overlap is a first moment, and an intensity of each drive signal is always not 0 in any time interval other than the first moment in one period.

4. The method of claim 1, wherein an intensity of each drive signal is always 0 in a second time interval in one period.

5. The method of claim 4, wherein the intensity of each drive signal is not 0 at any moment in one period except for the second time interval.

6. The method of claim 1, wherein the N drive signals have the same amplitude.

7. The method of claim 1, wherein the first waveform is centrosymmetric to the second waveform.

8. The method of claim 1, wherein:

   waveforms of the N drive signals are square waves; or
   the first waveform and the second waveform conform to a sine function.

9. The method of any one of claims 1 to 8, wherein the brushless motor comprises one or more stator cores (1), and the X phase wires (3) are wound on the tooth groups (11) in the first circumferential direction in an order from a $1^{st}$ phase wire to an $X^{th}$ phase wire;

   the N phase wires comprise an $i^{th}$ phase wire and a $k^{th}$ phase wire, and a phase difference between a drive signal of the $i^{th}$ phase wire and a drive signal of the $k^{th}$ phase wire is

   $\theta_{ik} = \frac{P}{2}\sum_{i}^{k-1}\beta_X$ , wherein $1{\le}i{<}k{\le}X$; and

   in each of the one or more stator cores (1), a spacing exists between the tooth group (11) of an $x^{th}$ phase wire and each of neighboring tooth groups (11) on two sides of the tooth group (11) of the $x^{th}$ phase wire, the spacing has a center position in the first circumferential direction, and among all the spacings formed between the Z tooth groups (11), a central angle corresponding to an arc between the center position of the $x^{th}$ phase wire and each of the center positions neighboring to the center position of the $x^{th}$ phase wire in the first circumferential direction is $\beta_X$, and a sector corresponding to the arc comprises at least a part of the tooth group (11) of the $x^{th}$ phase wire.

10. The method of any one of claims 1 to 8, further comprising:

    determining the N phase wires and a first amplitude of each of the drive signals according to a target torque of the rotor (2); and
    determining a first frequency of each of the drive signals according to a target rotational speed of the rotor (2).

11. The method of claim 10, wherein when the target torque is higher than a first preset torque, N=X.

12. The method of claim 11, wherein when the target torque is higher than the first preset torque, the first amplitudes of the N drive signals are the same.

13. The method of claim 10, wherein when the target torque is lower than a second preset torque,

    N<X, and the first amplitudes of the N drive signals are the same; or
    N=X, and at least two of the N drive signals have different first amplitudes.

14. The method of claim 10, wherein the method further comprises:

    calling a set of parameters required to achieve the target rotational speed and the target torque from a plurality of sets of parameters, wherein the set of parameters represents a second frequency and a second amplitude of each of the drive signals; and
    determining the first frequency and the first amplitude of each of the drive signals according to the set of parameters.

15. A driving apparatus for a brushless motor, wherein the brushless motor comprises:

    a stator core (1), comprising Z tooth groups (11) spaced apart from each other in a first circumferential direction;
    a rotor (2), comprising a magnetic ring (21) having a pole number P, P being an even number; and
    X phase wires (3), wound on the tooth groups (11) to form coils (31), X≥2, and Z=P×X, wherein in each of the phase wires (3), the coils (31) on two neighboring tooth groups (11) have opposite winding directions in a second circumferential direction of the tooth groups (11), and are spaced apart by X-1 tooth groups (11),
    the driving apparatus comprises:
    a providing module configured for providing N periodically varying drive signals to N phase wires (3) through first ends and second ends, which are independent of each other, of the N phase wires (3), wherein a waveform of each drive signal in one period comprises a first waveform with an intensity greater than 0 and a second waveform with an intensity less than 0, and $1 \leq N \leq X$.

16. A driving apparatus for a brushless motor, comprising:

a memory; and
a processor coupled to the memory and configured for running instructions stored in the memory to execute the driving method for a brushless motor of any one of claims 1 to 14.

17. A device, comprising:

the driving apparatus for a brushless motor of claim 15 or 16; and
the brushless motor.

18. A computer-readable storage medium, having computer program instructions stored therein, wherein the computer program instructions, when executed by a processor, cause the processor to implement the driving method for a brushless motor of any one of claims 1 to 14.

FIG. 1A

FIG. 1B

Provide N periodically varying drive signals to N phase wires through first ends and second ends, which are independent of each other, of the N phase wires ⌐ 210

FIG. 2

FIG. 3A

FIG. 3B

FIG. 3C

FIG. 4A

FIG. 4B

Drive signal of first phase wire

Drive signal of second phase wire

FIG. 5

Drive signal of first phase wire

Drive signal of second phase wire

$\theta_{12}$

FIG. 6A

Drive signal of first phase wire

0            → t

Drive signal of second phase wire

0            → t

Drive signal of third phase wire

0            → t

$\theta_{12}$

$\theta_{23}$

$\theta_{13}$

FIG. 6B

Drive signal of first phase wire

Drive signal of second phase wire

0            → t

t0     t1

FIG. 6C

Drive signal of first phase wire

Drive signal of second phase wire

FIG. 6D

FIG. 6E

Determine the N phase wires and a first amplitude of each of the drive signals according to a target torque of the rotor ⌐ 220

Determine a first frequency of each of the drive signals according to a target rotational speed of the rotor ⌐ 230

Provide N periodically varying drive signals to N phase wires through first ends and second ends, which are independent of each other, of the N phase wires ⌐ 210

FIG. 7

**800**

Providing module

**801**

FIG. 8

900

| Processor 902 | I/O interface 903 |

Bus 906

| Memory 901 | Network interface 904 | Storage interface 905 |

FIG. 9

FIG. 10A

FIG. 10B

In a control period, control a switch in a first half-bridge circuit and a switch in a second half-bridge circuit of each of N full-bridge circuits among X full-bridge circuits to turn on, such that the N full-bridge circuits provide periodically varying N drive signals to N phase wires through respective first and second ends, which are independent of each other, of the N phase wires

1110

FIG. 11

Determine the N phase wires and a first amplitude of each of the drive signals according to a target torque of the rotor — 1120

Determine a first frequency of each of the drive signals according to a target rotational speed of the rotor — 1130

In a control period, control a switch in a first half-bridge circuit and a switch in a second half-bridge circuit of each of N full-bridge circuits among X full-bridge circuits to turn on, such that the N full-bridge circuits provide periodically varying N drive signals to N phase wires through respective first and second ends, which are independent of each other, of the N phase wires — 1110

FIG. 12

## 1300

Control module

## 1301

FIG. 13

1400

| Processor 1402 | I/O interface 1403 |

Bus 1406

| Memory 1401 | Network interface 1404 | Storage interface 1405 |

FIG. 14

FIG. 15A

FIG. 15B

FIG. 16

## INTERNATIONAL SEARCH REPORT

| International application No. |
|---|
| **PCT/CN2024/092619** |

| A. | CLASSIFICATION OF SUBJECT MATTER |
|---|---|
| | H02P 6/08(2016.01)i |

According to International Patent Classification (IPC) or to both national classification and IPC

| B. | FIELDS SEARCHED |
|---|---|

Minimum documentation searched (classification system followed by classification symbols)

IPC: H02P

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 无刷, 电机, 缠绕, 绕线, 反向, 相反, 相位差, brushless, motor

| C. | DOCUMENTS CONSIDERED TO BE RELEVANT | |
|---|---|---|
| Category* | Citation of document, with indication, where appropriate, of the relevant passages | Relevant to claim No. |
| PX | CN 116545305 A (XUXIN TECHNOLOGY (SHENZHEN) GROUP CO., LTD.) 04 August 2023 (2023-08-04)<br>claims 1-18 | 1-18 |
| PX | CN 117411358 A (XUXIN TECHNOLOGY (SHENZHEN) GROUP CO., LTD.) 16 January 2024 (2024-01-16)<br>description, paragraphs 0055-0289, and figures 1-16 | 1-18 |
| PX | CN 116505803 A (XUXIN TECHNOLOGY (SHENZHEN) GROUP CO., LTD.) 28 July 2023 (2023-07-28)<br>description, paragraphs 0052-0286, and figures 1-16 | 1-18 |
| PX | CN 117040319 A (XUXIN TECHNOLOGY (SHENZHEN) GROUP CO., LTD.) 10 November 2023 (2023-11-10)<br>description, paragraphs 0056-0294, and figures 1-16 | 1-18 |
| Y | CN 114865818 A (PENG MING et al.) 05 August 2022 (2022-08-05)<br>description, paragraphs 0002-0112, and figures 1-38 | 1-10, 14-18 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 August 2024** | **19 August 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/092619** |

| C. | DOCUMENTS CONSIDERED TO BE RELEVANT | | |
|---|---|---|---|
| Category* | Citation of document, with indication, where appropriate, of the relevant passages | | Relevant to claim No. |
| Y | CN 110932613 A (VIVO COMMUNICATION TECHNOLOGY CO., LTD.) 27 March 2020 (2020-03-27) description, paragraphs 002-0069, and figures 1-8 | | 1-10, 14-18 |
| A | CN 212588247 U (PENG MING et al.) 23 February 2021 (2021-02-23) entire document | | 1-18 |
| A | US 4651067 A (HITACHI LTD. et al.) 17 March 1987 (1987-03-17) entire document | | 1-18 |

Form PCT/ISA/210 (second sheet) (July 2022)

## INTERNATIONAL SEARCH REPORT
### Information on patent family members

International application No.

**PCT/CN2024/092619**

| Patent document cited in search report | | | Publication date (day/month/year) | Patent family member(s) | | | Publication date (day/month/year) |
|---|---|---|---|---|---|---|---|
| CN | 116545305 | A | 04 August 2023 | None | | | |
| CN | 117411358 | A | 16 January 2024 | None | | | |
| CN | 116505803 | A | 28 July 2023 | None | | | |
| CN | 117040319 | A | 10 November 2023 | None | | | |
| CN | 114865818 | A | 05 August 2022 | CN | 215267846 | U | 21 December 2021 |
| CN | 110932613 | A | 27 March 2020 | None | | | |
| CN | 212588247 | U | 23 February 2021 | CN | 114865871 | A | 05 August 2022 |
| US | 4651067 | A | 17 March 1987 | JP | S60204285 | A | 15 October 1985 |

Form PCT/ISA/210 (patent family annex) (July 2022)